# EUROPEAN PATENT APPLICATION

(11) **EP 4 838 644 A2**
(43) Date of publication of application: **11.11.2026**
(21) Application number: 26171459.6
(22) Date of filing: 09.04.2026
(51) Int. Cl.: H01M 50/15, H01M 50/55, H01M 50/176, H01M 50/553

(54) **TOP-COVER ASSEMBLY, BATTERY, AND ELECTRICITY-CONSUMPTION DEVICE**

(30) Priority: 15.04.2025 CN 202510475459
(71) Applicant: Xiamen Hithium Energy Storage Technology Co., Ltd., Xiamen, Fujian 361100 (CN)
(72) Inventor: XIAO, Hepan, Xiamen, 361100 (CN); XU, Weidong, Xiamen, 361100 (CN); LI, Wenbo, Xiamen, 361100 (CN)
(74) Representative: Mewburn Ellis LLP

(57) **Abstract**

A top-cover assembly (100), a battery (200), and an electricity-consumption device (300) are provided. The top-cover assembly (100) includes a lower plastic member (30), a first terminal-post (41), and a first connecting sheet (50) extending linearly in a width direction of the top-cover assembly (100). The lower plastic member (30) includes a lower-plastic-member body (31). The lower-plastic-member body (31) defines a first through-hole (313) extending through the lower-plastic-member body (31) and allowing for the first terminal-post (41) to pass through. The first connecting sheet (50) is connected to the first terminal-post (41). The first connecting sheet (50) is configured to be welded to a first tab of an electrode assembly (220), to enable the first terminal-post (41) to be electrically connected to the electrode assembly (220) through the first connecting sheet (50). The first connecting sheet (50) is stacked with the lower-plastic-member body (31). A centerline (O1) of the first connecting sheet (50) in a length direction of the top-cover assembly (100) is offset from a centerline (O2) of the first terminal-post (41).

## Description

### TECHNICAL FIELD

This disclosure relates to the field of energy storage technology, and in particular, to a top-cover assembly, a battery, and an electricity-consumption device.

### BACKGROUND

With development of green energy and enhancement of environmental awareness of people, batteries with recyclable characteristics are increasingly widely used. A battery includes a cell, a housing, and a top-cover assembly. The cell is positioned in an accommodating space defined by the housing and the top-cover assembly. The top-cover assembly includes a terminal post and a connecting sheet. The terminal post is welded to the connecting sheet, and the connecting sheet is welded to a tab of the cell, so that the terminal post and the cell are electrically conductive through the connecting sheet. At present, the connection between the connecting sheet and the tab of the cell easily leads to battery failure.

### SUMMARY

In a first aspect, the present disclosure provides a top-cover assembly. The top-cover assembly includes a lower plastic member, a first terminal-post, and a first connecting sheet. The lower plastic member includes a lower-plastic-member body. The lower-plastic-member body defines a first through-hole. The first through-hole extends through the lower-plastic-member body in a thickness direction of the lower plastic member. The first connecting sheet is connected to the first terminal-post. The first connecting sheet is further configured to be welded to a first tab of an electrode assembly, to enable the first terminal-post to be electrically connected to the electrode assembly through the first connecting sheet. The first connecting sheet is stacked with the lower-plastic-member body. The first connecting sheet extends linearly in a width direction of the top-cover assembly. A centerline of the first connecting sheet in a length direction of the top-cover assembly is offset from a centerline of the first terminal-post.

It can be understood that in a top-cover assembly of the related art, a connecting sheet has a terminal-post connecting region for connection with a terminal post and a tab connecting region for connection with a tab. The terminal-post connecting region and the tab connecting region are arranged in a staggered manner in the length direction of the top-cover assembly, and have less or no overlapping projection region in the width direction of the top-cover assembly. As a result, during the current flowing from the terminal-post connecting region to the tab connecting region, the current can only flow obliquely in an inclined direction of the tab connecting region relative to the terminal-post connecting region (that is, a direction inclined to the width direction of the top-cover assembly), and the flow path of the current is long, leading to low energy efficiency of the battery.

By contrast, in this embodiment, the first connecting sheet has a certain region connected to the first terminal-post and a certain region connected to the first tab. Therefore, when the first connecting sheet extends linearly in the width direction of the top-cover assembly, the region of the first connecting sheet connected to the first terminal-post and the region of the first connecting sheet connected to the first tab can be arranged in the same column or substantially in the same column in the width direction of the top-cover assembly. That is, the region of the first connecting sheet connected to the first terminal-post and the region of the first connecting sheet connected to the first tab can have a certain overlapping projection region in the width direction of the top-cover assembly. That is, the region of the first connecting sheet connected to the first tab can have a smaller inclination or no inclination relative to the region of the first connecting sheet connected to the first terminal-post. Therefore, the current can flow in a straight-line direction parallel or substantially parallel to the width direction of the top-cover assembly during the current flowing from the region of the first connecting sheet connected to the first tab to the region of the first connecting sheet connected to the first terminal-post. Therefore, compared with the oblique flow (the direction inclined to the width direction of the top-cover assembly) in the related art, the current flow direction parallel or substantially parallel to the width direction of the top-cover assembly in this embodiment can shorten the current flow path to the greatest extent, thereby reducing the transmission loss of electrical energy and the manufacturing cost, and improving the energy efficiency of the battery.

In addition, the first connecting sheet needs to be connected to each of the first terminal-post and the first tab of the electrode assembly. Therefore, the centerline of the first terminal-post eccentrically set with the centerline of the first connecting sheet in the length direction of the top-cover assembly can, on the basis of ensuring the connection area and strength between the first terminal-post and the first connecting sheet, enable the region of the first connecting sheet connected to the first terminal-post and the region of the first connecting sheet welded to the first tab to be distributed on the left and right sides of the first connecting sheet as much as possible and to be staggered. Therefore, when the first connecting sheet and the first tab are welded, difficult connection between the first connecting sheet and the first terminal-post caused by excessive long first tab blocking the region of the first connecting sheet required to be connected to the first terminal-post, can be avoided, thereby helping to avoid battery failure. Moreover, the eccentric arrangement can also meet a spacing requirement between the first terminal-post and other terminal posts, as well as a spacing requirement between the first tab and other tabs, thereby avoiding interference between the respective tabs and the lower plastic member.

Furthermore, by arranging at least one rib adjacent to the first connecting sheet, at least one rib can serve as a foolproof structure for the first terminal-post and the first connecting sheet, thereby improving the assembly efficiency and the assembly accuracy of the top-cover assembly.

In a possible implementation, the first connecting sheet includes a first terminal-post connecting-portion and two first tab connecting-portions. The first terminal-post connecting-portion is connected to the first terminal-post to enable the first connecting sheet to be electrically connected to the first terminal-post. A centerline of the first terminal-post connecting-portion in the length direction of the top-cover assembly is coaxial with the centerline of the first connecting sheet in the length direction of the top-cover assembly and is offset from the centerline of the first terminal-post. The two first tab connecting-portions are fixedly connected to both sides of the first terminal-post connecting-portion in the width direction of the top-cover assembly respectively. One of the two first tab connecting-portions, the first terminal-post connecting-portion, and another of the two first tab connecting-portions are sequentially connected in the width direction of the top-cover assembly and are arranged in a straight line. The two first tab connecting-portions are configured to be welded to the first tab of the electrode assembly to enable the first connecting sheet to be electrically connected to the electrode assembly.

In a possible implementation, the lower plastic member further includes at least one rib. The at least rib is fixedly connected to the lower-plastic-member body, is spaced apart from the first through-hole, and is adjacent to the first connecting sheet. The at least one rib includes a first rib and a second rib. Both the first rib and the second rib are fixedly connected to a surface of the lower-plastic-member body positioned facing towards the first connecting sheet, and are positioned at opposite sides of the first through-hole in a length direction of the lower plastic member. Both the first rib and the second rib extend in a width direction of the lower plastic member. In the length direction of the lower plastic member, the first connecting sheet is positioned between the first rib and the second rib, The first rib and the second rib have different dimensions in a width direction of the lower plastic member, and/or a distance between the first rib and the first through-hole is different from a distance between the second rib and the first through-hole in the length direction of the lower plastic member.

In a possible implementation, the lower plastic member has a first side-surface. The first side-surface is an end surface of one end of the lower plastic member in the length direction of the lower plastic member. The first connecting sheet has a first edge and a second edge. The first edge and the second edge are arranged opposite to each other in the length direction of the top-cover assembly. The first edge is closer to the first side-surface than the second edge. In the length direction of the lower plastic member, a distance between the first rib and a first edge of the first connecting sheet ranges from 0.5 mm to 9 mm. In the length direction of the lower plastic member, a distance between the second rib and the second edge of the first connecting sheet ranges from 0.5 mm to 9 mm.

In a possible implementation, the top-cover assembly further includes a first heat insulation sheet. The first heat insulation sheet is positioned between the lower-plastic-member body and the first connecting sheet. The first heat insulation sheet defines a first via hole, a first avoidance hole, and a second avoidance hole. The first via hole, the first avoidance hole, and the second avoidance hole all extend through the first heat insulation sheet in a thickness direction of the first heat insulation sheet. The first terminal-post passes through the first via hole. The first rib passes through the first avoidance hole. A dimension of the first avoidance hole is adapted to a dimension of the first rib. The second rib passes through the second avoidance hole. A dimension of the second avoidance hole is adapted to a dimension of the second rib. In a thickness direction of the top-cover assembly, a projection of the first connecting sheet on the lower plastic member falls within a projection of the first heat insulation sheet on the lower plastic member.

In a possible implementation, the top-cover assembly further includes a first heat insulation sheet. The first heat insulation sheet is positioned between the lower-plastic-member body and the first connecting sheet and is passed through by the first rib and the second rib. In addition, in the thickness direction of the top-cover assembly, a projection of the first connecting sheet on the lower plastic member falls within a projection of the first heat insulation sheet on the lower plastic member.

In a possible implementation, the lower plastic member further includes at least one rib. The at least rib is fixedly connected to the lower-plastic-member body, is spaced apart from the first through-hole, and is adjacent to the first connecting sheet. The at least one rib includes a first rib, a second rib, a third rib, a fourth rib, and a fifth rib. The first rib, the second rib, the third rib, the fourth rib, and the fifth rib are all disposed at a periphery of the first through-hole. Both the first rib and the second rib are positioned at one side of the lower plastic member in a width direction of the lower plastic member. Both the first rib and the second rib extend in a length direction of the lower plastic member, and are arranged opposite to and spaced apart from each other in the length direction of the lower plastic member. Both the third rib and the fourth rib are positioned at another side of the lower plastic member in the width direction of the lower plastic member. Both the third rib and the fourth rib extend in the length direction of the lower plastic member, and are arranged opposite to and spaced apart from each other in the length direction of the lower plastic member. The third rib is further arranged opposite to and spaced apart from the first rib in the width direction of the lower plastic member. The fourth rib is further arranged opposite to and spaced apart from the second rib in the width direction of the lower plastic member. The fifth rib extends in the width direction of the lower plastic member. In the width direction of the lower plastic member, the first rib, the fifth rib, and the third rib are arranged in sequence. The first connecting sheet is positioned in a gap region between the fifth rib and each other the second rib and the fourth rib, and abuts against the fifth rib.

In a possible implementation, the top-cover assembly further includes two first heat insulation sheets. One of the two first heat insulation sheets is positioned between the lower-plastic-member body and one of the two first tab connecting-portions, and is positioned at one side of each of the first rib and the second rib that is positioned facing away from the first through-hole. In a thickness direction of the top-cover assembly, a projection of one of the two first tab connecting-portions on the lower plastic member falls within a projection of one of the two first heat insulation sheets on the lower plastic member. Another of the two first heat insulation sheets is positioned between the lower-plastic-member body and another of the two first tab connecting-portions, and is positioned at one side of each of the third rib and the fourth rib that is positioned facing away from the first through-hole. In the thickness direction of the top-cover assembly, a projection of the another of the two first tab connecting-portions on the lower plastic member falls within a projection of another of the two first heat insulation sheets on the lower plastic member.

In a possible implementation, the lower plastic member has a first side-surface. The first side-surface is an end surface of one end of the lower plastic member in the length direction of the lower plastic member. The first connecting sheet has a first edge and a second edge. The first edge and the second edge are arranged opposite to each other in the length direction of the top-cover assembly. The first edge is closer to the first side-surface than the second edge. A radius of part of the first terminal-post connected to the first connecting sheet is R1. In the width direction of the lower plastic member, a distance L5 between the first rib and a centerline of the first through-hole in the length direction of the lower plastic member satisfies: (R1 + 0.5 mm) ≤ L5 ≤ (R1 + 5 mm). In the width direction of the lower plastic member, a distance L6 between the second rib and the centerline of the first through-hole in the length direction of the lower plastic member satisfies: (R1 + 0.5 mm) ≤ L6 ≤ (R1 + 5 mm). In the width direction of the lower plastic member, a distance L7 between the third rib and the centerline of the first through-hole in the length direction of the lower plastic member satisfies: (R1 + 0.5 mm) ≤ L7 ≤ (R1 + 5 mm). In the width direction of the lower plastic member, a distance L8 between the fourth rib and the centerline of the first through-hole in the length direction of the lower plastic member satisfies: (R1 + 0.5 mm) ≤ L8 ≤ (R1 + 5 mm). In the length direction of the lower plastic member, a distance between the fifth rib and the first edge of the first connecting sheet ranges from 0.5 mm to 9 mm.

In a possible implementation, the lower plastic member further includes a barrier wall. The barrier wall surrounds an outer edge of the lower-plastic-member body and protrudes from a surface of the lower-plastic-member body positioned facing towards the first connecting sheet. The barrier wall and the lower-plastic-member body cooperatively define an accommodating groove. The first heat insulation sheet, part of the first terminal-post, and part of the first connecting sheet are all positioned in the accommodating groove.

In a possible implementation, the lower plastic member further includes a first boss and a second boss. Both the first boss and the second boss are fixedly connected to the lower-plastic-member body and protrude from the surface of the lower-plastic-member body positioned facing towards the first connecting sheet. The first boss and the second boss are respectively positioned at both ends of the lower-plastic-member body in a length direction of the lower-plastic-member body and are connected to the barrier wall. The first boss defines at least one first recess at one side of the first boss positioned facing towards the first connecting sheet. The second boss defines at least one second recess at one side of the second boss positioned facing towards the first connecting sheet. The at least one first recess and the at least one second recess all allow avoidance of the electrode assembly.

In a possible implementation, a surface of each of the two first tab connecting-portions configured to be positioned facing towards the electrode assembly is recessed towards a top cover, with respect to a surface of the first terminal-post connecting-portion configured to be positioned facing towards the electrode assembly. Part of the first terminal-post is positioned in a gap region between the first terminal-post connecting-portion and the lower plastic member, and is welded to the first terminal-post connecting-portion.

In a possible implementation, the lower plastic member has a first side-surface. The first side-surface is an end surface of one end of the lower plastic member in the length direction of the lower plastic member. The first terminal-post connecting-portion has a first edge and a second edge. The first edge and the second edge are arranged opposite to each other in the length direction of the top-cover assembly. The first edge is closer to the first side-surface than the second edge. The first edge of the first terminal-post connecting-portion serves as a first edge of the first connecting sheet. The second edge of the first terminal-post connecting-portion serves as a second edge of the first connecting sheet. The first connecting sheet further includes an indentation array. The indentation array is disposed on a surface of the first terminal-post connecting-portion positioned facing away from the lower plastic member. A minimum distance between the indentation array and the first edge in the length direction of the top-cover assembly is smaller than a minimum distance between the indentation array and the second edge in the length direction of the top-cover assembly. A projection of the first terminal-post on the first connecting sheet in a thickness direction of the top-cover assembly falls within a region defined by the indentation array on the first connecting sheet.

In a possible implementation, a welding mark of the first terminal-post connecting-portion is a solid welding mark.

In a possible implementation, the top-cover assembly further includes a second terminal-post. The second terminal-post has an integrated structure and includes a second post-body, a second base, and a second connecting sheet. The second post-body passes through the lower plastic member and is spaced apart from the first terminal-post in the length direction of the top-cover assembly. The second base is coaxial with the second post-body and is connected between the second post-body and the second connecting sheet. The second connecting sheet is stacked with the lower plastic member and extends linearly in the width direction of the top-cover assembly. The second connecting sheet includes two second tab connecting-portions. The two second tab connecting-portions are respectively positioned at both sides of the second base. The two second tab connecting-portions are configured to be welded to a second tab of the electrode assembly, to enable the second connecting sheet to be electrically connected to the electrode assembly.

In a possible implementation, a centerline of the second connecting sheet in the length direction of the top-cover assembly is offset from a centerline of the second post-body. A distance between the centerline of the first terminal-post and the centerline of the second post-body is larger than a distance between the centerline of the first connecting sheet in the length direction of the top-cover assembly and the centerline of the second connecting sheet in the length direction of the top-cover assembly.

In a possible implementation, the second terminal-post has a solid structure; or the second terminal-post defines a cavity therein, an opening of the cavity is positioned on a surface of the second connecting sheet positioned facing away from the second post-body, and the cavity extends from the second connecting sheet to the second post-body through the second base.

In a second aspect, the present disclosure further provides a battery. The battery includes an electrode assembly, a housing, and the top-cover assembly in the first aspect. The top-cover assembly is connected to the housing. The top-cover assembly and the housing cooperatively define an accommodating space. The electrode assembly is positioned in the accommodating space.

In a third aspect, the present disclosure further provides an electricity-consumption device. The electricity-consumption device includes the battery in the second aspect.

### BRIEF DESCRIPTION OF THE DRAWINGS

FIG. 1 is a schematic structural view of an energy storage system provided in embodiments of the present disclosure.
FIG. 2 is a schematic structural view of a battery provided in embodiments of the present disclosure.
FIG. 3 is a schematic structural view of a top-cover assembly provided in one embodiment of the present disclosure.
FIG. 4 is an exploded schematic structural view of the top-cover assembly illustrated in FIG. 3.
FIG. 5 is a schematic structural view of a top cover of the top-cover assembly illustrated in FIG. 3 from one angle.
FIG. 6 is a schematic structural view of the top cover of the top-cover assembly illustrated in FIG. 3 from another angle.
FIG. 7 is a partial schematic cross-sectional view of a structure illustrated in FIG. 3 taken along cutting line A-A.
FIG. 8 is a schematic structural view of a lower plastic member of the top-cover assembly illustrated in FIG. 3 from one angle.
FIG. 9 is a schematic structural view of the lower plastic member of the top-cover assembly illustrated in FIG. 3 from another angle.
FIG. 10 is a partial schematic cross-sectional view of another structure illustrated in FIG. 3 taken along cutting line A-A.
FIG. 11 is a schematic structural view of a first terminal-post of the top-cover assembly illustrated in FIG. 3 from one angle.
FIG. 12 is a schematic structural view of a first upper plastic member of the top-cover assembly illustrated in FIG. 3 from one angle.
FIG. 13 is a schematic structural view of the first upper plastic member of the top-cover assembly illustrated in FIG. 3 from another angle.
FIG. 14 is a schematic structural view of a first pressing ring of the top-cover assembly illustrated in FIG. 3 from one angle.
FIG. 15 is a schematic structural view of a first sealing ring of the top-cover assembly illustrated in FIG. 3 from one angle.
FIG. 16 is a schematic structural view of the top-cover assembly illustrated in FIG. 3 from another angle.
FIG. 17 is a schematic structural view of a first connecting sheet of the top-cover assembly illustrated in FIG. 16.
FIG. 18 is a partial schematic cross-sectional view of another structure illustrated in FIG. 3 taken along cutting line B-B.
FIG. 19 is a schematic structural view of the first connecting sheet illustrated in FIG. 17 from another angle.
FIG. 20 is a schematic structural view of a first heat insulation sheet illustrated in FIG. 16.
FIG. 21 is a partial schematic cross-sectional view of yet another structure illustrated in FIG. 3 taken along line A-A.
FIG. 22 is a schematic structural view of a second terminal-post of the top-cover assembly illustrated in FIG. 3 from one angle.
FIG. 23 is a partial schematic cross-sectional view of another structure illustrated in FIG. 3 taken along cutting line C-C.
FIG. 24 is a schematic structural view of a second heat insulation sheet illustrated in FIG. 16.
FIG. 25 is a schematic structural view of a second upper plastic member of the top-cover assembly illustrated in FIG. 3 from one angle.
FIG. 26 is a schematic structural view of the second upper plastic member of the top-cover assembly illustrated in FIG. 3 from another angle.
FIG. 27 is a schematic structural view of a second pressing ring of the top-cover assembly illustrated in FIG. 3 from one angle.
FIG. 28 is a schematic structural view of a second sealing ring of the top-cover assembly illustrated in FIG. 3 from one angle.
FIG. 29A is a schematic structural view of a top-cover assembly provided in another embodiment of the present disclosure from one angle.
FIG. 29B is a schematic structural view of a top-cover assembly provided in FIG. 29A from another angle.
FIG. 29C is an enlarged schematic view of Region F illustrated in FIG. 29B.
FIG. 30 is a schematic structural view of a lower plastic member of the top-cover assembly illustrated in FIG. 29A.
FIG. 31 is a schematic structural view of a second terminal-post of the top-cover assembly illustrated in FIG. 29A.

### DETAILED DESCRIPTION

For ease of understanding, terms involved in embodiments of the present disclosure are first explained. "And/or" is only an association relationship for describing associated objects and represents that three relationships may exist. For example, A and/or B may represent the following three cases: Only A exists, both A and B exist, and only B exists. "Multiple" means two or more than two. "Connection" may be understood in a broad sense. For example, a connection between A and B may be a direct connection between A and B, or an indirect connection between A and B through an intermediary.

Implementations of the present disclosure are clearly described below with reference to the accompanying drawings.

The embodiments of the present disclosure provide a top-cover assembly, a battery, and an electricity-consumption device.

Since energy required by people has strong temporal and spatial characteristics, in order to use energy in a reasonable manner and improve energy utilization, a medium or a device is required to store energy in the same energy form or in another energy form converted and then to release energy in a specific energy form based on requirements of future applications. As is known to all, at present, generation of green electrical energy is generally dependent on photovoltaics, wind power, water potential, and the like. However, in general, wind energy, solar energy, and the like are strongly intermittent and volatile, resulting in an unstable power grid, insufficient power supply at a power consumption peak, and overmuch power supply at a power consumption valley. In addition, an unstable voltage may further damage electric power. Therefore, "curtailment of wind and photovoltaics" may occur due to insufficient power demand or insufficient power-grid admitting ability, and energy storage is required to solve these problems. That is, electrical energy is stored by converting it into other forms of energy by physical or chemical means, and energy is released by converting it into electrical energy when needed. In brief, energy storage is similar to a large "power bank", which stores electrical energy when photovoltaics and wind energy are sufficient and releases stored electric power when needed.

Taking electrochemical energy storage as an example, the embodiments of the present disclosure provide an electricity-consumption device. The electricity-consumption device includes one group of chemical batteries. Chemical elements in the chemical batteries can be used as an energy storage medium to implement a charging/discharging process through chemical reaction or change of the energy storage medium. In brief, electrical energy generated by solar energy and wind energy is stored in the chemical batteries. When the usage of external electrical energy reaches a peak, the power stored in the chemical batteries is released for use, or is transferred to a place where the power is scarce for reuse.

At present, energy storage may be applied in various application scenarios, including power-generation-side energy storage, grid-side energy storage, renewable energy grid-connected energy storage, user-side energy storage, etc. Corresponding types of energy storage apparatuses include the following.

A large-sized energy storage container applied in a grid-side energy-storage scenario. The energy storage container may serve as a high-quality active and reactive regulation power source in the grid, which can realize matching of electrical energy loads in time and space, enhance the capacity for integration of renewable energy, and is of great significance in the backup of the grid system, relieving the pressure of power supply at a peak load, and peak shaving and frequency modulation.

Small and medium-sized energy storage cabinets are used in industrial and commercial energy storage scenarios on the user side and small household energy storage boxes used in household energy storage scenarios on the user side. The main operating mode is "peak shaving and valley filling". There is a large price difference in electricity bills at peak and valley according to electricity demand. After users have the energy storage device, in order to reduce costs, they usually charge the energy storage cabinets/boxes during the low electricity price period. During the peak electricity price period, the electricity in the energy storage device is discharged for use to achieve the purpose of saving electricity bills. In addition, in remote regions, as well as regions prone to natural disasters such as earthquakes and hurricanes, the presence of household energy storage devices is equivalent to users providing backup power for themselves and the power grid, eliminating the inconvenience caused by frequent power outages due to disasters or other reasons.

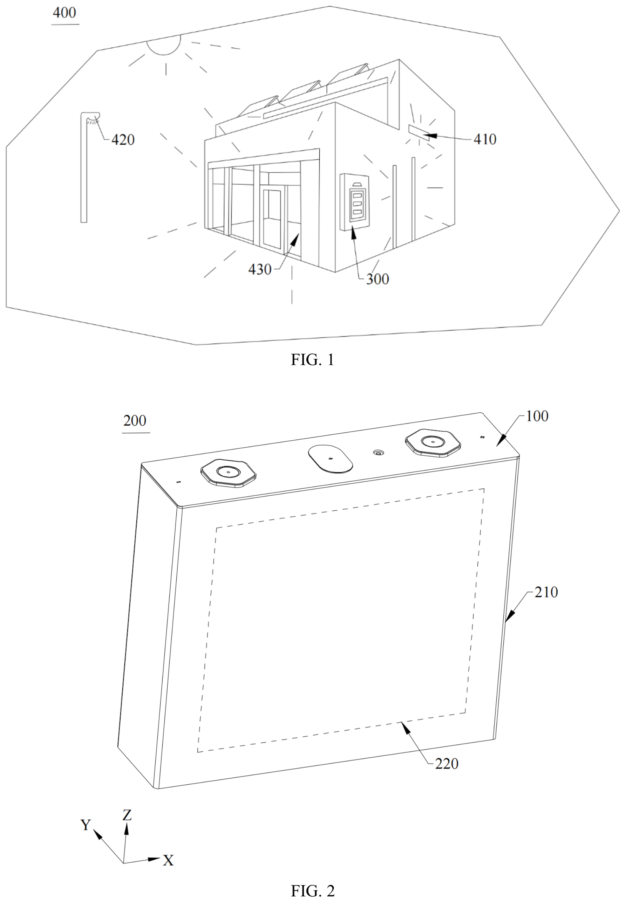

Reference can be made to FIG. 1, which is a schematic structural view of an energy storage system 400 provided in embodiments of the present disclosure. The embodiments of the present disclosure are illustrated by taking the household energy storage scenario in user-side energy storage as an example, and an electricity-consumption device 300 provided in the present disclosure is not limited to the household energy storage scenario.

The embodiments of the present disclosure provide an energy storage system 400. The energy storage system 400 includes an electrical energy conversion apparatus 410, a first user-load 420, a second user-load 430, and an electricity-consumption device 300. The electricity-consumption device 300 is a small energy storage box that can be mounted on an outdoor wall by means of wall hanging. Specifically, the photovoltaic panel can convert solar energy into electrical energy during the period of low electricity prices. The electricity-consumption device 300 is configured to store the electrical energy and supply it to the street lamp and household appliance for use when the electricity price is at a peak, or to supply power when the power grid is off/out of power.

The electricity-consumption device 300 may include, but is not limited to, a single battery, a battery module, a battery pack, a battery system, etc. When the electricity-consumption device 300 includes multiple batteries 200, the multiple batteries 200 are electrically connected and are all positioned inside the housing of the electricity-consumption device 300. Under the protection of the housing, the multiple batteries 200 can be protected from the interference of the external environment. Exemplarily, the multiple batteries 200 are arranged at intervals. The multiple batteries 200 may be connected in series, or in parallel, or in a mixed connection of series and parallel, so as to achieve a larger capacity and power. The embodiments of the present disclosure are described by taking the electricity-consumption device 300 including a battery as an example, but it may be understood that the electricity-consumption device 300 is not limited thereto.

Reference can be made to FIG. 2, which is a schematic structural view of a battery 200 provided in embodiments of the present disclosure.

The battery 200 may include a top-cover assembly 100, a housing 210, and an electrode assembly 220. The top-cover assembly 100 is connected to the housing 210. The top-cover assembly 100 and the housing 210 cooperatively define an accommodating space. The electrode assembly 220 is positioned in the accommodating space. Exemplarily, the top-cover assembly 100 may be welded to the housing 210 by welding. The housing 210 may be made of a metal material, such as aluminum alloy. The battery 200 may be a cylindrical battery or a prismatic battery, etc.

The electrode assembly 220 may include at least two electrode cores (not shown in the figure). The at least two electrode cores are arranged in sequence in the thickness direction of the battery 200. The arrangement of multiple electrode cores can increase the capacity of the battery 200, so that the battery 200 allows for a long time, thereby increasing the applicable scenarios of the battery 200. Each electrode core may include a winding core, a first tab, and a second tab. Both the first tab and the second tab are connected to the winding core. The polarity of the first tab and the polarity of the second tab are opposite, one is a positive tab, and the other is a negative tab.

**In** a specific application scenario, the number of electrode cores may be four. The four electrode cores are paired to form two cell groups. The two cell groups are arranged in the thickness direction of the battery 200. In each cell group, a first tab of one electrode core is connected to a first tab of another electrode core, and a second tab of one electrode core is connected to a second tab of another electrode core, thereby forming a first tab and a second tab of the cell group. In two cell groups, all first tabs can be welded to the first connecting sheet 50 of the top-cover assembly 100, and all second tabs can be welded to the second connecting sheet 423 of the top-cover assembly 100, thereby realizing the same-polarity lead-out of the four electrode cores.

Exemplarily, in the same electrode core, all layers of the first tab can be connected together by ultrasonic welding, and all layers of the second tab can be connected together by ultrasonic welding. In the same cell group, the first tabs of all electrode cores can be connected together by ultrasonic welding to form the first tab of the cell group, and second tabs of all electrode cores can be connected together by ultrasonic welding to form the second tab of the cell group. Between each cell group and the first connecting sheet 50 and between each cell group and the second connecting sheet 423, the first tab of each cell group can be connected to the first connecting sheet 50 by laser welding, and the second tab of each cell group can be connected to the second connecting sheet 423 by laser welding. In summary, the first tab and the second tab can be pre-welded by ultrasonic first, and then laser-welded to the first connecting sheet 50 and the second connecting sheet 423 respectively. Therefore, the low welding yield caused by ultrasonic welding can be avoided, thereby improving the welding yield, and increasing the reliability of the connections among components of the top-cover assembly 100.

It may be noted that the purpose of FIG. 2 is only to schematically describe the connection relationship between the top-cover assembly 100, the housing 210, and the electrode assembly 220, and does not specifically limit the connection positions, specific configurations, and quantity of various components. The structure illustrated in the embodiments of the present disclosure does not constitute a specific limitation on the battery 200. In other embodiments of the present disclosure, the battery 200 may include more or fewer components than those illustrated in FIG. 2, or combine or split certain components, or have different component arrangements. The components illustrated in FIG. 2 may be implemented in hardware, software, or a combination of software and hardware.

The following will describe in detail the structure of the top-cover assembly 100 provided in the embodiments of the present disclosure through two embodiments.

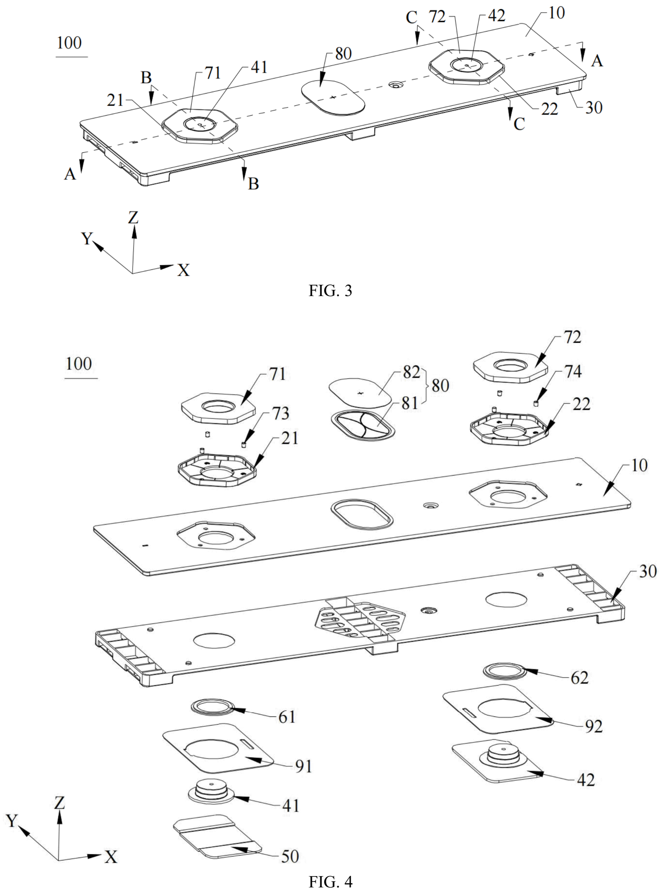

Reference can be made to FIG. 3 and FIG. 4 in combination, where FIG. 3 is a schematic structural view of a top-cover assembly 100 provided in one embodiment of the present disclosure, and FIG. 4 is an exploded schematic structural view of the top-cover assembly 100 illustrated in FIG. 3.

**In** the following, for ease of description, a length direction of the top-cover assembly 100 is defined as a X direction, a width direction of the top-cover assembly 100 is defined as a Y direction, and a thickness direction of the top-cover assembly 100 is defined as a Z direction. The X direction, the Y direction, and the Z direction are perpendicular to each other in pairs. A centerline of a component (e.g., a first connecting sheet 50, a first terminal-post connecting-portion 51, a rib 32, a second connecting sheet 423, etc.) in the length direction of the top-cover assembly 100 (i.e., the X direction) may be defined as an imaginary line that is perpendicular to the XY plane and passes through a center point of the component in the X direction. A centerline of a terminal post may refer to an axis of the terminal post that is perpendicular to the XY plane and passes through a center point of the terminal post.

In this embodiment, the top-cover assembly 100 may include a top cover 10, a first upper plastic member 21, a second upper plastic member 22, a lower plastic member 30, a first terminal-post 41, a second terminal-post 42, a first connecting sheet 50, a first sealing ring 61, a second sealing ring 62, a first pressing ring 71, a second pressing ring 72, a first limiting body 73, a second limiting body 74, and an explosion-proof-valve assembly 80.

The first upper plastic member 21, the second upper plastic member 22, and the lower plastic member 30 are all mounted on the top cover 10. The first upper plastic member 21 and the second upper plastic member 22 are positioned at the same side of the top cover 10, and are also respectively positioned at both sides of the top cover 10 in the length direction of the top cover 10 (the X direction in the figure). The lower plastic member 30 is positioned at the other side of the top cover 10 facing away from the first upper plastic member 21 and the second upper plastic member 22. The lower plastic member 30 and the first upper plastic member 21, as well as the lower plastic member 30 and the second upper plastic member 22, respectively extend from two opposite surfaces of the top cover 10 in the thickness direction of the top cover 10.

The first terminal-post 41 is mounted on the top cover 10, the first upper plastic member 21, and the lower plastic member 30, and is insulated from the top cover 10 through the first upper plastic member 21, the lower plastic member 30, and the first sealing ring 61. The second terminal-post 42 is mounted on the top cover 10, the second upper plastic member 22, and the lower plastic member 30, and is insulated from the top cover 10 through the second upper plastic member 22, the second sealing ring 62, and the lower plastic member 30. The first terminal-post 41 and the second terminal-post 42 may also serve as electrode leads of the battery 200, thereby establishing electrical connection between the battery 200 and external devices. The first terminal-post 41 may be one of the positive terminal-post and the negative terminal-post, and the second terminal-post 42 may be the other of the positive terminal-post and the negative terminal-post. In the following, the structure of the terminal posts will be described by taking the first terminal-post 41 as the negative terminal-post and the second terminal-post 42 as the positive terminal-post as an example, but it may be understood that it is not limited thereto.

The first connecting sheet 50 is connected to the first terminal-post 41 and is also welded to all the first tabs of the electrode assembly 220, so as to establish electrical connection between the first terminal-post 41 and the electrode assembly 220. The second terminal-post 42 may include a second connecting sheet 423. The second connecting sheet 423 is welded to all the second tabs of the electrode assembly 220, so as to establish electrical connection between the second terminal-post 42 and the electrode assembly 220.

The first sealing ring 61 is sleeved on the first terminal-post 41, is positioned between the lower plastic member 30 and the first terminal-post 41, and is positioned between the top cover 10 and the first terminal-post 41. The first sealing ring 61 can be used to seal the gap between the top cover 10 and the first terminal-post 41, so that a decrease in the insulation between the top cover 10 and the first terminal-post 41 and the safety of the electrode assembly 220, caused by intrusion of the electrolyte into the gap between the top cover 10 and the first terminal-post 41, can be avoided. The second sealing ring 62 is sleeved on the second terminal-post 42, is positioned between the lower plastic member 30 and the second terminal-post 42, and is positioned between the top cover 10 and the second terminal-post 42. The second sealing ring 62 can be used to seal the gap between the top cover 10 and the second terminal-post 42, so that a decrease in the insulation between the top cover 10 and the second terminal-post 42 and the safety of the cell, caused by intrusion of the electrolyte into the gap between the top cover 10 and the second terminal-post 42, can be avoided.

The first pressing ring 71 is mounted on the first upper plastic member 21, is sleeved on the first terminal-post 41, and is electrically connected to the first terminal-post 41. The second pressing ring 72 is mounted on the second upper plastic member 22, is sleeved on the second terminal-post 42, and is electrically connected to the second terminal-post 42.

The first limiting body 73 passes through the first upper plastic member 21 and is positioned between the first pressing ring 71 and the top cover 10. The second limiting body 74 is inserted through the second upper plastic member 22 and is positioned between the second pressing ring 72 and the top cover 10. The number of the first limiting bodies 73 may be multiple. The multiple first limiting bodies 73 pass through the first upper plastic member 21 at intervals and are positioned between the top cover 10 and the first pressing ring 71. The number of the second limiting bodies 74 may be multiple. The multiple second limiting bodies 74 pass through the second upper plastic member 22 at intervals and are positioned between the top cover 10 and the second pressing ring 72.

The explosion-proof-valve assembly 80 is mounted on the top cover 10 and is configured for pressure relief protection for the battery 200.

In the following, the structures of various components of the top-cover assembly 100 and the assembly relationship between various components will be described in detail with reference to the accompanying drawings.

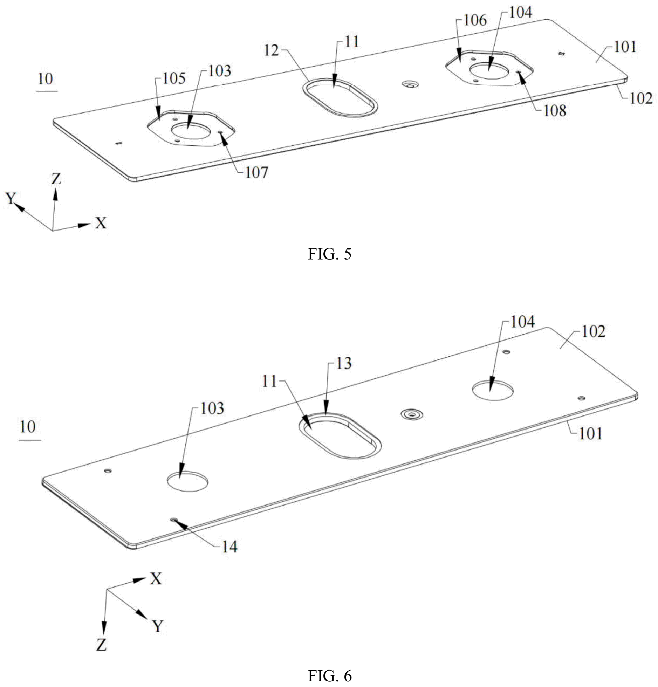

Reference can be made to FIG. 5, which is a schematic structural view of a top cover 10 of the top-cover assembly 100 illustrated in FIG. 3 from one angle.

The top cover 10 may have a first surface 101 and a second surface 102. The second surface 102 and the first surface 101 are positioned facing away from each other in the thickness direction of the top cover 10 (the Z direction in the figure). The first surface 101 may be positioned facing away from the electrode assembly 220. The second surface 102 may be positioned facing towards the electrode assembly 220.

The top cover 10 may define a first hole 103 and a second hole 104. The first hole 103 may be spaced apart from the second hole 104 in the length direction of the top cover 10. Both the first hole 103 and the second hole 104 may extend through the top cover 10 in the thickness direction of the top cover 10. That is, both the first hole 103 and the second hole 104 may extend through the first surface 101 and the second surface 102.

The top cover 10 may define a first mounting groove 105 and a second mounting groove 106. The first mounting groove 105 may be spaced apart from the second mounting groove 106 in the length direction of the top cover 10. An opening of the first mounting groove 105 and an opening of the second mounting groove 106 may both be positioned on the first surface 101. The first mounting groove 105 may be recessed from the first surface 101 towards the inside of the top cover 10 and is coaxial with the first hole 103. The cross-sectional width of the first mounting groove 105 in the thickness direction of the top cover 10 may be larger than the cross-sectional width of the first hole 103 in the thickness direction of the top cover 10. The second mounting groove 106 may be recessed from the first surface 101 towards the inside of the top cover 10 and is coaxial with the second hole 104. The cross-sectional width of the second mounting groove 106 in the thickness direction of the top cover 10 may be larger than the cross-sectional width of the second hole 104 in the thickness direction of the top cover 10. Both the first mounting groove 105 and the second mounting groove 106 may be blind grooves.

The top cover 10 may define a first limiting hole 107 and a second limiting hole 108. An opening of the first limiting hole 107 may be positioned on a bottom wall of the first mounting groove 105. The bottom wall of the first mounting groove 105 is arranged opposite to the opening of the first mounting groove 105 in the thickness direction of the top cover 10. The first limiting hole 107 may be recessed from the bottom wall of the first mounting groove 105 towards the inside of the top cover 10. The first limiting hole 107 may be positioned at an outer edge of the first hole 103. An opening of the second limiting hole 108 may be positioned on a bottom wall of the second mounting groove 106. The bottom wall of the second mounting groove 106 is arranged opposite to the opening of the second mounting groove 106 in the thickness direction of the top cover 10. The second limiting hole 108 may be recessed from the bottom wall of the second mounting groove 106 towards the inside of the top cover 10. The second limiting hole 108 may be positioned at an outer edge of the second hole 104.

Both the first limiting hole 107 and the second limiting hole 108 are blind holes. The number of the first limiting holes 107 may be multiple. The structures of the multiple first limiting holes 107 may be similar, the same, or different. The multiple first limiting holes 107 may be arranged at intervals on the bottom wall of the first mounting groove 105. The number of the second limiting holes 108 may be multiple. The structures of the multiple second limiting holes 108 may be similar, the same, or different. The multiple second limiting holes 108 may be arranged at intervals on the bottom wall of the second mounting groove 106. Further, the multiple first limiting holes 107 may be arranged at intervals in the circumferential direction of the first hole 103. The multiple second limiting holes 108 may be arranged at intervals in the circumferential direction of the second hole 104. Exemplarily, the number of the first limiting holes 107 may be three. The three first limiting holes 107 may be arranged at intervals on the bottom wall of the first mounting groove 105. The number of the second limiting holes 108 may be three. The three second limiting holes 108 may be arranged at intervals on the bottom wall of the second mounting groove 106.

Reference can be made to FIG. 5 and FIG. 6 in combination, where FIG. 6 is a schematic structural view of the top cover 10 of the top-cover assembly 100 illustrated in FIG. 3 from another angle.

The top cover 10 may define an explosion-proof hole 11. The explosion-proof hole 11 may extend through the top cover 10 in the thickness direction of the top cover 10, and is also positioned between the first mounting groove 105 and the second mounting groove 106.

The top cover 10 may be provided with a mounting platform 12 and a groove 13. The mounting platform 12 may be disposed on the first surface 101 and protrude in a direction away from the top cover 10 relative to the first surface 101. The mounting platform 12 may also be disposed around an outer edge of the explosion-proof hole 11. An opening of the groove 13 may be positioned on the second surface 102. The groove 13 may be recessed from the second surface 102 towards the inside of the top cover 10. The groove 13 may be coaxial with and in communication with the explosion-proof hole 11. The cross-sectional width of the groove 13 in the thickness direction of the top cover 10 may be larger than the cross-sectional width of the explosion-proof hole 11 in the thickness direction of the top cover 10.

The top cover 10 may define a positioning hole 14. An opening of the positioning hole 14 may be positioned on the second surface 102. The positioning hole 14 may be recessed from the second surface 102 towards the inside of the top cover 10. The positioning hole 14 may be a blind hole. The number of the positioning holes 14 may be multiple. The structures of the multiple positioning holes 14 may be similar, the same, or different. The multiple positioning holes 14 may be arranged at intervals on the top cover 10. Exemplarily, the number of the positioning holes 14 may be four. The four positioning holes 14 are respectively defined at the four corners of the top cover 10.

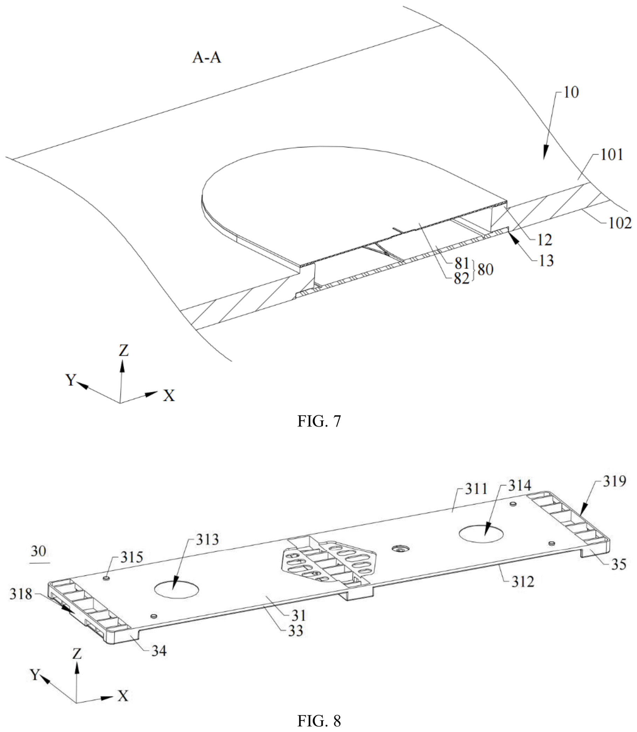

Reference can be made to FIG. 7, which is a partial schematic cross-sectional view of a structure illustrated in FIG. 3 taken along cutting line A-A.

The explosion-proof-valve assembly 80 may include an explosion-proof valve 81 and an explosion-proof protection sheet 82. Both the explosion-proof valve 81 and the explosion-proof protection sheet 82 may be mounted on the top cover 10 and are arranged in sequence in the thickness direction of the top cover 10. Specifically, the explosion-proof valve 81 may be positioned in the groove 13 of the top cover 10, and cover the opening of the explosion-proof hole 11 positioned on the second surface 102 of the top cover 10. The explosion-proof protection sheet 82 may be connected to the mounting platform 12 of the top cover 10, and cover the opening of the explosion-proof hole 11 positioned on the first surface 101 of the top cover 10. The explosion-proof protection sheet 82 may also cover the explosion-proof valve 81.

Reference can be made to FIG. 3 and FIG. 8 in combination, where FIG. 8 is a schematic structural view of a lower plastic member 30 of the top-cover assembly 100 illustrated in FIG. 3 from one angle.

The lower plastic member 30 may be stacked with the top cover 10. The lower plastic member 30 may have a first side-surface 318 and a second side-surface 319. The first side-surface 318 and the second side-surface 319 may be positioned facing away from each other in the length direction of the lower plastic member 30. That is, the first side-surface 318 is an end surface of one end of the lower plastic member 30 in the length direction of the lower plastic member 30, and the second side-surface 319 is an end surface of the other end of the lower plastic member 30 in the length direction of the lower plastic member 30.

The lower plastic member 30 may include a lower-plastic-member body 31. The lower-plastic-member body 31 is positioned on one side of the top cover 10 in the thickness direction and is fixedly connected to the top cover 10, so as to establish a fixed connection between the lower plastic member 30 and the top cover 10. The lower-plastic-member body 31 may have a third surface 311 and a fourth surface 312. The fourth surface 312 may be positioned facing away from the third surface 311 in the thickness direction of the lower plastic member 30 (the Z direction in the figure). The third surface 311 may be positioned facing towards the top cover 10. The fourth surface 312 may be positioned facing towards the electrode assembly 220.

The lower-plastic-member body 31 may define a first through-hole 313 and a second through-hole 314. The first through-hole 313 and the second through-hole 314 may be defined opposite to and spaced apart from each other in the length direction of the lower plastic member 30 (the X direction in the figure), and both extend through the lower-plastic-member body 31 in the thickness direction of the lower plastic member 30. That is, both the first through-hole 313 and the second through-hole 314 may extend through the third surface 311 and the fourth surface 312. The first through-hole 313 may be in communication with the first hole 103 of the top cover 10. The second through-hole 314 may be in communication with the second hole 104 of the top cover 10.

The lower-plastic-member body 31 may be provided with a positioning post 315. The positioning post 315 may be disposed on the third surface 311 and protrude in the direction towards the top cover 10 relative to the third surface 311. The positioning post 315 may be mounted in the positioning holes 14 of the top cover 10 to establish a fixed connection between the lower plastic member 30 and the top cover 10. The shape of the positioning posts 315 may be adapted to the shape of the positioning holes 14 of the top cover 10. The number of the positioning posts 315 may be multiple. The structures of the multiple positioning posts 315 may be similar, the same, or different. The multiple positioning posts 315 may be arranged at intervals on the lower-plastic-member body 31. Exemplarily, the number of the positioning posts 315 may be four. The four positioning posts 315 are respectively arranged at the four corners of the lower-plastic-member body 31. Each positioning post 315 is mounted in one positioning hole 14 of the top cover 10.

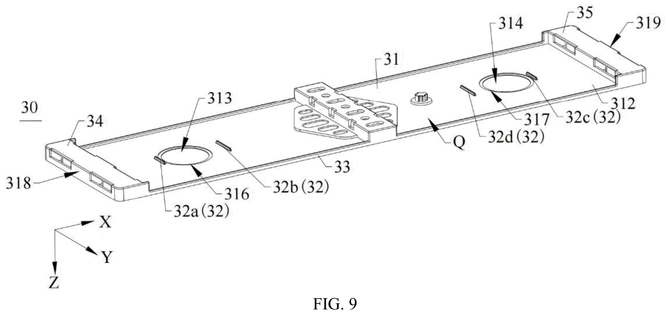

Reference can be made to FIG. 8 and FIG. 9 in combination, where FIG. 9 is a schematic structural view of the lower plastic member 30 of the top-cover assembly 100 illustrated in FIG. 3 from another angle.

The lower-plastic-member body 31 may define a first thinning groove 316 and a second thinning groove 317. The first thinning groove 316 and the second thinning groove 317 may be arranged at intervals in the length direction of the lower plastic member 30. An opening of the first thinning groove 316 and an opening of the second thinning groove 317 may both be positioned on the fourth surface 312. Both the first thinning groove 316 and the second thinning groove 317 may be recessed from the fourth surface 312 into the interior of the lower plastic member 30. The first thinning groove 316 may be coaxial with and in communication with the first through-hole 313. The cross-sectional width of the first thinning groove 316 in the thickness direction of the lower plastic member 30 may be larger than the cross-sectional width of the first through-hole 313 in the thickness direction of the lower plastic member 30. The second thinning groove 317 may be coaxial with and in communication with the second through-hole 314. The cross-sectional width of the second thinning groove 317 in the thickness direction of the lower plastic member 30 may be larger than the cross-sectional width of the second through-hole 314 in the thickness direction of the lower plastic member 30.

It can be understood that by defining the first thinning groove 316 and the second thinning groove 317, on the basis of ensuring the strength of the lower plastic member 30, the thickness of the lower plastic member 30 can be reduced, and the weight of the lower plastic member 30 can be reduced, thereby facilitating the miniaturization and thinning of the top-cover assembly 100.

A distance between a bottom wall of the first thinning groove 316 and the third surface 311, and/or a distance between a bottom wall of the second thinning groove 317 and the third surface 311 may range from 0.1 mm to 0.7 mm (both inclusive).

The bottom wall of the first thinning groove 316 may be arranged opposite to the opening of the first thinning groove 316 in the thickness direction of the lower plastic member 30. The bottom wall of the second thinning groove 317 may be arranged opposite to the opening of the second thinning groove 317 in the thickness direction of the lower plastic member 30. Exemplarily, each of the distance between the bottom wall of the first thinning groove 316 and the third surface 311 and the distance between the bottom wall of the second thinning groove 317 and the third surface 311 may be 0.3 mm.

It can be understood that if the distance between the bottom wall of each thinning groove and the third surface 311 is set to be less than 0.1 mm, the lower plastic member 30 may not have the Z-direction bearing capacity at the position where each thinning groove is defined, thereby easily leading to the failure of the top-cover assembly 100 and an increase in the manufacturing difficulty of the lower plastic member 30. If the distance between the bottom wall of each thinning groove and the third surface 311 is set to be greater than 0.7 mm, the step wall of the lower plastic member 30 may be too thin, thereby resulting in a significant decrease in the sealing performance between the lower plastic member 30 and each sealing ring when they are assembled. Therefore, by setting the distance between the bottom wall of each thinning groove and the third surface 311 to range from 0.1 mm to 0.7 mm, the aforementioned problems can be fully avoided, thereby improving the operating reliability of the top-cover assembly 100.

Reference can be made to FIG. 9. The lower plastic member 30 may further include at least one rib 32. The at least one rib 32 is fixedly connected to the fourth surface 312 of the lower-plastic-member body 31, protrudes in the direction towards the electrode assembly 220 relative to the fourth surface 312 of the lower-plastic-member body 31, and is disposed adjacent to the first through-hole 313.

Specifically, the at least one rib 32 may include a first rib 32a and a second rib 32b. Both the first rib 32a and the second rib 32b are fixedly connected to the fourth surface 312 of the lower-plastic-member body 31, protrude towards the electrode assembly 220 relative to the fourth surface 312 of the lower-plastic-member body 31, and are positioned at the outer edge of the first through-hole 313. Both the first rib 32a and the second rib 32b may extend in the width direction of the lower plastic member 30 (the Y direction in the figure), and are arranged opposite to and spaced apart from each other in the length direction of the lower plastic member 30. The first rib 32a and the second rib 32b may be positioned on opposite sides of the first through-hole 313 in the length direction of the lower plastic member 30. In the length direction of the lower plastic member 30, a distance between the first rib 32a and the centerline of the first through-hole 313 is different from a distance between the second rib 32b and the centerline of the first through-hole 313. That is, in the length direction of the lower plastic member 30, the distance between the first rib 32a and the first through-hole 313 is different from the distance between the second rib 32b and the first through-hole 313. The length of the first rib 32a may be different from the length of the second rib 32b. That is, the dimension of the first rib 32a in the width direction of the lower plastic member 30 is not equal to the dimension of the second rib 32b in the width direction of the lower plastic member 30.

Exemplarily, in the length direction of the lower plastic member 30, the distance between the first rib 32a and the centerline of the first through-hole 313 is smaller than the distance between the second rib 32b and the centerline of the first through-hole 313. That is, in the length direction of the lower plastic member 30, the distance between the first rib 32a and the first through-hole 313 is smaller than the distance between the second rib 32b and the first through-hole 313, and the first rib 32a is closer to the first through-hole 313 than the second rib 32b. The length of the first rib 32a may be smaller than the length of the second rib 32b. That is, the dimension of the first rib 32a in the width direction of the lower plastic member 30 is smaller than the dimension of the second rib 32b in the width direction of the lower plastic member 30. In other embodiments, the length of the first rib 32a may also be larger than the length of the second rib 32b, or equal to the length of the second rib 32b, and there is no strict limitation on this.

The lower plastic member 30 may also include a third rib 32c and a fourth rib 32d. Both the third rib 32c and the fourth rib 32d are fixedly connected to the fourth surface 312 of the lower-plastic-member body 31, protrude towards the electrode assembly 220 relative to the fourth surface 312 of the lower-plastic-member body 31, and are positioned at the outer edge of the second through-hole 314. Both the third rib 32c and the fourth rib 32d may extend in the width direction of the lower plastic member 30 (the Y direction in the figure), and are arranged opposite to and spaced apart from each other in the length direction of the lower plastic member 30. The third rib 32c may be symmetrically arranged with the first rib 32a. The fourth rib 32d may be symmetrically arranged with the second rib 32b. The third rib 32c and the fourth rib 32d may be positioned at opposite sides of the second through-hole 314 in the length direction of the lower plastic member 30. In the length direction of the lower plastic member 30, a distance between the third rib 32c and the centerline of the second through-hole 314 is different from a distance between the fourth rib 32d and the centerline of the second through-hole 314. That is, in the length direction of the lower plastic member 30, the distance between the third rib 32c and the second through-hole 314 is different from the distance between the fourth rib 32d and the second through-hole 314. The length of the third rib 32c may be different from the length of the fourth rib 32d. That is, the dimension of the third rib 32c in the width direction of the lower plastic member 30 is not equal to the dimension of the fourth rib 32d in the width direction of the lower plastic member 30.

Exemplarily, in the length direction of the lower plastic member 30, the distance between the third rib 32c and the centerline of the second through-hole 314 is smaller than the distance between the fourth rib 32d and the centerline of the second through-hole 314. That is, in the length direction of the lower plastic member 30, the distance between the third rib 32c and the second through-hole 314 is smaller than the distance between the fourth rib 32d and the second through-hole 314, and the third rib 32c is closer to the second through-hole 314 than the fourth rib 32d. The length of the third rib 32c may be smaller than the length of the fourth rib 32d. That is, the dimension of the third rib 32c in the width direction of the lower plastic member 30 is smaller than the dimension of the fourth rib 32d in the width direction of the lower plastic member 30. In other embodiments, the length of the third rib 32c may also be larger than the length of the fourth rib 32d, or equal to the length of the fourth rib 32d, and there is no strict limitation on this.

Reference can continue to be made to FIG. 9. The lower plastic member 30 may further include a barrier wall 33. The barrier wall 33 may be disposed around the outer edge of the lower-plastic-member body 31 and protrude relative to the fourth surface 312 of the lower-plastic-member body 31. The barrier wall 33 and the lower-plastic-member body 31 may cooperatively define an accommodating groove Q. At least part of the first rib 32a, at least part of the second rib 32b, at least part of the third rib 32c, and at least part of the fourth rib 32d may all be positioned in the accommodating groove Q.

The lower plastic member 30 may further include a first boss 34 and a second boss 35. Both the first boss 34 and the second boss 35 may be fixedly connected to the lower-plastic-member body 31 and protrude relative to the fourth surface 312 of the lower-plastic-member body 31. The first boss 34 and the second boss 35 may be respectively positioned at both ends of the lower-plastic-member body 31 in the length direction and are both connected to the barrier wall 33. The protruding height of the first boss 34 relative to the fourth surface 312 of the lower-plastic-member body 31 and the protruding height of the second boss 35 relative to the fourth surface 312 of the lower-plastic-member body 31 may be the same, and both are larger than the protruding height of the barrier wall 33 relative to the fourth surface 312 of the lower-plastic-member body 31. The first boss 34 and the second boss 35 may be used to abut against the electrode assembly 220.

It can be understood that by providing the first boss 34 and the second boss 35 on the lower-plastic-member body 31, a distance between the electrode assembly 220 and the lower-plastic-member body 31 can be increased, and a distance between the electrode assembly 220 and the top cover 10 can also be increased. Therefore, when the electrode assembly 220 undergoes thermal runaway, the probability of the electric sparks in the electrode assembly 220 splashing to the outside of the battery 200 through the explosion-proof hole 11 can be reduced, thereby improving the safety performance of the battery 200.

The lower-plastic-member body 31, the barrier wall 33, and the first boss 34 are connected to form the first side-surface 318 of the lower plastic member 30. The lower-plastic-member body 31, the barrier wall 33, and the second boss 35 are connected to form the second side-surface 319 of the lower plastic member 30. In some other embodiments, the first side-surface 318 and the second side-surface 319 may also be independently formed by the lower-plastic-member body 31, and there is no strict restriction on this.

The above has introduced the structures of the top cover 10, the lower plastic member 30, and the explosion-proof-valve assembly 80. Below, the structures and assembly of the first terminal-post 41 and the components near the first terminal-post 41, such as the first upper plastic member 21, the first pressing ring 71, the first sealing ring 61, and the first connecting sheet 50, will be described in detail.

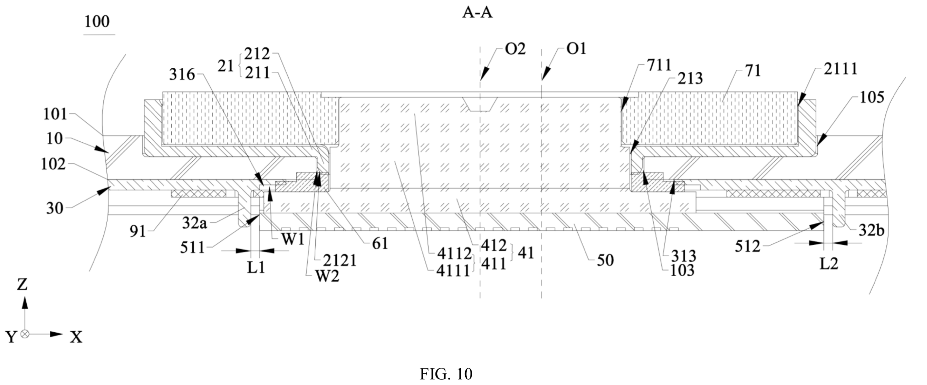

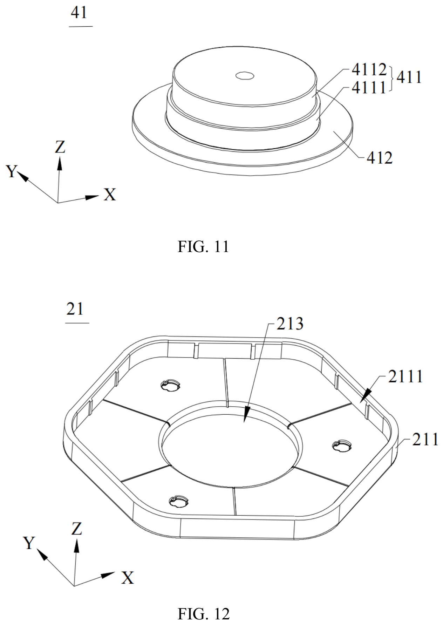

Reference can be made to FIG. 10 and FIG. 11 in combination, where FIG. 10 is a partial schematic cross-sectional view of another structure illustrated in FIG. 3 taken along cutting line A-A, and FIG. 11 is a schematic structural view of a first terminal-post 41 of the top-cover assembly 100 illustrated in FIG. 3 from one angle.

The first terminal-post 41 may pass through the top cover 10 and the lower plastic member 30, and is arranged closer to the first side-surface 318 of the lower plastic member 30 than the second terminal-post 42. Specifically, the first terminal-post 41 may include a first post-body 411 and a first base 412. The first post-body 411 and the first base 412 may be coaxial with and connected to each other. Exemplarily, the material of the first post-body 411 may be aluminum. The material of the first base 412 may be copper.

The first post-body 411 may pass through the first hole 103 of the top cover 10 and the first through-hole 313 of the lower plastic member 30. Part of the first post-body 411 may exceed in a direction away from the top cover 10 relative to the first surface 101 of the top cover 10. Specifically, the first post-body 411 may include a first sub-post 4111 and a second sub-post 4112. The first sub-post 4111 and the second sub-post 4112 may be coaxial with and connected to each other. The first sub-post 4111 may be connected between the second sub-post 4112 and the first base 412. That is, in the height direction of the first terminal-post 41, the first base 412, the first sub-post 4111, and the second sub-post 4112 may be connected in sequence. The cross-sectional width of the first sub-post 4111 in the height direction of the first terminal-post 41 (the Z direction in the figure) may be larger than the cross-sectional width of the second sub-post 4112 in the height direction of the first terminal-post 41, and smaller than the cross-sectional width of the first base 412 in the height direction of the first terminal-post 41. That is, the projection of the first post-body 411 in the height direction of the first terminal-post 41 can completely fall on the first base 412. The first sub-post 4111 may be positioned in the first hole 103 of the top cover 10 and the first through-hole 313 of the lower plastic member 30. Part of the second sub-post 4112 may be positioned in the first hole 103 of the top cover 10, and the remaining part of the second sub-post 4112 may exceed relative to the first surface 101 of the top cover 10.

The first base 412 may be positioned at the side of the lower plastic member 30 facing away from the top cover 10 (i.e., the side of the fourth surface 312 of the lower plastic member 30), and define a first gap W1 with the lower plastic member 30. The first gap W1 may surround the first post-body 411. That is, in the thickness direction of the top-cover assembly 100 (the Z direction in the figure), the first gap W1 may be positioned between the top cover 10 and the lower plastic member 30 and surround the outside of the first post-body 411. The projection of the first base 412 on the lower plastic member 30 in the thickness direction of the top-cover assembly 100 (the Z direction in the figure) may partially fall on the lower plastic member 30. That is, in the thickness direction of the top-cover assembly 100, there may be a certain overlapping region between the first base 412 and the lower plastic member 30.

In the length direction of the top-cover assembly 100, the first base 412 may also be positioned between the first rib 32a and the second rib 32b of the lower plastic member 30. IN addition, in the length direction of the top-cover assembly 100, a distance between the first base 412 and the first rib 32a of the lower plastic member 30 may be smaller than a distance between the first base 412 and the second rib 32b of the lower plastic member 30. That is, the first base 412 may be arranged close to the first rib 32a and away from the second rib 32b, so that the whole first terminal-post 41 is closer to the first rib 32a than the second rib 32b.

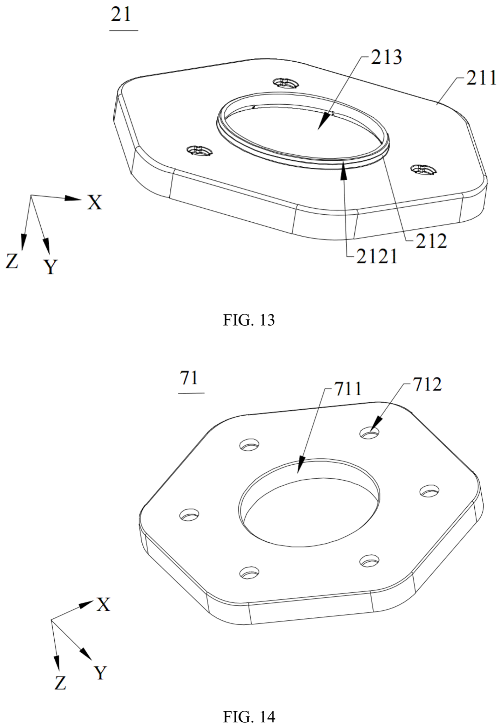

Reference can be made to FIG. 10, FIG. 12, and FIG. 13 in combination, where FIG. 12 is a schematic structural view of a first upper plastic member 21 of the top-cover assembly 100 illustrated in FIG. 3 from one angle, and FIG. 13 is a schematic structural view of the first upper plastic member 21 of the top-cover assembly 100 illustrated in FIG. 3 from another angle.

The first upper plastic member 21 may be sleeved on the first terminal-post 41 and positioned between the top cover 10 and the first terminal-post 41. Specifically, the first upper plastic member 21 may include a first upper-plastic-member body 211 and a first protrusion 212. The first upper-plastic-member body 211 and the first protrusion 212 may be coaxial with and connected to each other. The cross-sectional width of the first upper-plastic-member body 211 in the thickness direction of the first upper plastic member 21 (the Z direction in the figure) may be larger than the cross-sectional width of the first protrusion 212 in the thickness direction of the top cover 10.

The first upper plastic member 21 may define a third through-hole 213. The third through-hole 213 may extend through the first upper plastic member 21 in the thickness direction of the first upper plastic member 21 (the Z direction in the figure). That is, the third through-hole 213 may extend through the first upper-plastic-member body 211 and the first protrusion 212 in the thickness direction of the first upper plastic member 21. Part of the first sub-post 4111 and at least part of the second sub-post 4112 of the first terminal-post 41 may be positioned in the third through-hole 213.

The first upper-plastic-member body 211 may be mounted in the first mounting groove 105 of the top cover 10. Part of the first upper-plastic-member body 211 is positioned in the first mounting groove 105 of the top cover 10, and the remaining part of the first upper-plastic-member body 211 exceeds, in a direction away from the lower plastic member 30, the first surface 101 of the top cover 10. That is, the first upper-plastic-member body 211 may be positioned at the side of the top cover 10 facing away from the lower plastic member 30 and also sleeved on the first post-body 411 of the first terminal-post 41.

The first upper-plastic-member body 211 may define a third mounting groove 2111. An opening of the third mounting groove 2111 may be positioned on the surface of the first upper-plastic-member body 211 facing away from the first protrusion 212. The third mounting groove 2111 may be recessed from the surface of the first upper-plastic-member body 211 positioned away from the first protrusion 212 towards the inside of the first upper plastic member 21. The third mounting groove 2111 may be coaxial with the third through-hole 213. The cross-sectional width of the third mounting groove 2111 in the thickness direction of the first upper plastic member 21 may be larger than the cross-sectional width of the third through-hole 213 in the thickness direction of the top cover 10.

One end of the first protrusion 212 is fixedly connected to the first upper-plastic-member body 211, and the other end of the first protrusion 212 extends in a direction away from the first upper-plastic-member body 211. The first protrusion 212 may be positioned in the first hole 103 of the top cover 10 and also surround the outside of the first post-body 411 of the first terminal-post 41. One end of the first protrusion 212 positioned facing away from the first upper-plastic-member body 211 may be provided with a first guiding chamfer 2121. The first guiding chamfer 2121 may serve as part of the outer surface of the first protrusion 212 and be inclined in a direction from the top cover 10 to the first terminal-post 41. A second gap W2 may be defined between the first guiding chamfer 2121 and an inner wall of the first hole 103. Exemplarily, the first guiding chamfer 2121 may be arranged around one end of the first protrusion 212 positioned facing away from the first upper-plastic-member body 211, in the circumferential direction of the first protrusion 212.

It can be understood that by forming the first guiding chamfer 2121 at the end of the first protrusion 212 positioned facing away from the first upper-plastic-member body 211, when the first upper plastic member 21 is assembled with the top cover 10, the guiding function of the first guiding chamfer 2121 can be utilized to enable the first protrusion 212 to quickly slide into the first hole 103 of the top cover 10, thereby achieving rapid assembly between the first upper plastic member 21 and the top cover 10, reducing the assembly time of the top-cover assembly 100, and improving the assembly efficiency of the top-cover assembly 100.

Reference can be made to FIG. 10 and FIG. 14 in combination, where FIG. 14 is a schematic structural view of a first pressing ring 71 of the top-cover assembly 100 illustrated in FIG. 3 from one angle.

The first pressing ring 71 may be mounted in the third mounting groove 2111 of the first upper-plastic-member body 211, sleeved on the first post-body 411 of the first terminal-post 41, and electrically connected to the first terminal-post 41. Part of the first pressing ring 71 may be positioned in the third mounting groove 2111 of the first upper-plastic-member body 211, and the remaining part of the first pressing ring 71 may exceed, in a direction away from the first protrusion 212, the surface of the first upper-plastic-member body 211 positioned facing away from the first protrusion 212.

The first pressing ring 71 may define a fourth through-hole 711. The fourth through-hole 711 may extend through the first pressing ring 71 in the thickness direction of the first pressing ring 71 (the Z-direction in the figure). The first pressing ring 71 may surround the second sub-post 4112 of the first terminal-post 41. That is, the second sub-post 4112 of the first terminal-post 41 may be positioned in the fourth through-hole 711.

The first pressing ring 71 may define a third limiting hole 712. An opening of the third limiting hole 712 may be positioned on the surface of the first pressing ring 71 facing towards the first upper plastic member 21. The third limiting hole 712 may be recessed from the surface of the first pressing ring 71 facing towards the first upper plastic member 21 towards the inside of the first pressing ring 71. The third limiting hole 712 may be positioned at the outer edge of the fourth through-hole 711. The third limiting hole 712 is a blind hole. The number of the third limiting holes 712 may be multiple. The structures of the multiple third limiting holes 712 may be similar, the same, or different. The multiple third limiting holes 712 may be arranged at intervals on the surface of the first pressing ring 71 facing towards the first upper plastic member 21. Further, the multiple third limiting holes 712 may also be arranged at intervals in the circumferential direction of the fourth through-hole 711.

Exemplarily, the number of the third limiting holes 712 may be six. The six third limiting holes 712 may be arranged at intervals on the surface of the first pressing ring 71 facing towards the first upper plastic member 21, positioned at the periphery of the fourth through-hole 711, and arranged in sequence in the circumferential direction of the fourth through-hole 711.

Reference can be made to FIG. 3 and FIG. 4 in combination. The first limiting body 73 can pass through the first upper plastic member 21. One end of the first limiting body 73 is positioned in the first limiting hole 107 of the top cover 10, and the other end of the first limiting body 73 is positioned in the third limiting hole 712 of the top cover 10. The first limiting body 73 can be used to support the first pressing ring 71 and limit the rotation of the first pressing ring 71 relative to the first upper plastic member 21 in the circumferential direction of the first upper plastic member 21. Exemplarily, the number of the first limiting bodies 73 may be six. The six first limiting bodies 73 can pass through the first upper plastic member 21 and be arranged at intervals between the top cover 10 and the first pressing ring 71.

In this embodiment, the first sealing ring 61 can have good elastic deformation performance. The first sealing ring 61 can undergo elastic deformation after being compressed and rebound after the pressure is removed. The first sealing ring 61 may have a first state and a second state. When the first sealing ring 61 is in the first state, the first sealing ring 61 is separated from both the lower plastic member 30 and the top cover 10. When the first sealing ring 61 is in the second state, the first sealing ring 61 is sleeved on the first post-body 411 of the first terminal-post 41, and is positioned in the first hole 103 of the top cover 10, the first through-hole 313 of the lower plastic member 30, and the first gap W1 between the lower plastic member 30 and the first base 412 of the first terminal-post 41. That is, when the first sealing ring 61 is in the first state, the first sealing ring 61 is in an uncompressed natural state. When the first sealing ring 61 is in the second state, the first sealing ring 61 is in a compressed state under pressure. The following description will take the first sealing ring 61 in the second state as an example, but it may be understood that it is not limited to this.

Reference can be made to FIG. 10. The first sealing ring 61 may be sleeved on the first post-body 411 of the first terminal-post 41, and is positioned in the first hole 103 of the top cover 10, the first through-hole 313 of the lower plastic member 30, and the first gap W1 between the lower plastic member 30 and the first base 412 of the first terminal-post 41. The first sealing ring 61 positioned in the first gap W1 is in interference fit with the lower plastic member 30 in the thickness direction of the top-cover assembly 100 (the Z-direction in the figure). Exemplarily, the interference amount between the first sealing ring 61 positioned in the first gap W1 and the lower plastic member 30 in the thickness direction of the top-cover assembly 100 may be 0.1 mm.

It can be understood that in the related art, when the top-cover assembly is assembled, the insulation resistance between the first terminal-post and the top cover may be greater than 200 MΩ, which enables good insulation performance between the first terminal-post and the top cover. However, when the top-cover assembly comes into contact with the electrolyte, the electrolyte may invade the region where the first terminal-post of the top-cover assembly is located. Due to errors such as manufacturing tolerances of various components of the top-cover assembly and assembly tolerances during assembly, a gap may be defined between the first sealing ring and the inner wall of the first through-hole of the lower plastic member in the radial direction of the first sealing ring. When the electrolyte is present in the gap, it is easy to sharply reduce the insulation performance between the top cover and the first terminal-post, leading to a reduction in the safety of the cell. In addition, when there is an unsealed gap between the upper plastic member and the first sealing ring, foreign objects such as intermediate metal debris or moisture are likely to invade the gap, thereby further reducing the insulation between the first terminal-post and the top cover.

Accordingly, in the embodiments of the present disclosure, part of the first sealing ring 61 is positioned within the first gap W1 between the lower plastic member 30 and the first base 412 of the first terminal-post 41 in the thickness direction of the top-cover assembly 100, and the first sealing ring 61 within the first gap W1 is in interference fit with the lower plastic member 30 in the thickness direction of the top-cover assembly 100. Therefore, the first sealing ring 61 can effectively seal the first gap W1 between the lower plastic member 30 and the top cover 10, and so that the flow path of the electrolyte entering between the first terminal-post 41 and the top cover 10 via the first gap W1 can be blocked, thereby avoiding the problem of short-circuit caused by the electrical conduction of the first terminal-post 41 and the top cover 10 when the first terminal-post 41 and the top cover 10 are in contact with the electrolyte, and facilitating improvement of the safety performance of the cell.

Further, the first thinning groove 316 of the lower plastic member 30 may define part of the first gap W1. Part of the first sealing ring 61 positioned in the first thinning groove 316 is in interference fit with the lower plastic member 30.

It can be understood that if the lower plastic member 30 does not define the first thinning groove 316, after the lower plastic member 30 and the first sealing ring 61 are assembled, the first sealing ring 61 positioned within the first gap W1 may be relatively thin, so that the sealing effect between the lower plastic member 30 and the first terminal-post 41 can be reduced and the processing and manufacturing difficulty of the first sealing ring 61 can be increased. In addition, since the thickness of the lower plastic member 30 at the position of the first thinning groove 316 of the lower plastic member 30 is relatively thin, disposing part of the first sealing ring 61 in the first thinning groove 316 can provide a certain deformation-filling space for the first sealing ring 61, thereby avoiding the reduction of the sealing effect between the lower plastic member 30 and the first terminal-post 41 caused by the excessive rebound force of the first sealing ring 61. Moreover, after being compressed, the first sealing ring 61 can extend in the radial direction of the first sealing ring 61 and fully contact with the lower plastic member 30, thereby increasing the sealing surface between the lower plastic member 30 and the first sealing ring 61 and improving the sealing performance between the lower plastic member 30 and the first terminal-post 41.

In addition, in the length direction of the top-cover assembly 100 (the X direction in the figure), the overlapping length between the first sealing ring 61 and the lower plastic member 30 may be greater than or equal to 0.2 mm. Therefore, there can be a sufficient contact area between the first sealing ring 61 and the lower plastic member 30, so as to effectively extend the sealing surface between the first sealing ring 61 and the lower plastic member 30.

Reference can continue to be made to FIG. 10. The first sealing ring 61 may be in contact with the inner wall of the first hole 103 of the top cover 10, the inner wall of the first through-hole 313 of the lower plastic member 30, the bottom wall of the first thinning groove 316, and part of the second surface 102 of the top cover 10. Part of the first sealing ring 61 positioned in the first hole 103 of the top cover 10 is in interference fit with the top cover 10 in the radial direction of the first sealing ring 61. Part of the first sealing ring 61 positioned in the first through-hole 313 of the lower plastic member 30 is in interference fit with the lower plastic member 30 in the radial direction of the first sealing ring 61. It can be understood that, on the basis of forming the primary seal formed between the bottom of the first sealing ring 61 and the lower plastic member 30, forming the secondary seal between the top of the first sealing ring 61 and the top cover 10 can enhance the sealing performance of the first sealing ring 61, and further prevent the electrical conduction between the top cover 10 and the first terminal-post 41 caused by the electrolyte inside the cell or the moisture outside the battery 200 entering the gap between the top cover 10 and the first terminal-post 41.

In this embodiment, the part of the first sealing ring 61 positioned in the first hole 103 of the top cover 10 may be in contact with one end of the first protrusion 212 facing away from the first upper-plastic-member body 211. It can be understood that by bringing the first sealing ring 61 into contact with the first upper plastic member 21, the first sealing ring 61 can cooperate with the first upper plastic member 21 to isolate the top cover 10 from the first terminal-post 41, so that there is good insulation performance between the top cover 10 and the first terminal-post 41, thereby effectively avoiding the short-circuit caused by the electrical conduction between the top cover 10 and the first terminal-post 41, resulting in better reliability.

Further, the part of the first sealing ring 61 positioned in the first hole 103 of the top cover 10 may be in interference fit with one end of the first protrusion 212 facing away from the first upper-plastic-member body 211. The interference amount (i.e., the interference distance) between the first sealing ring 61 and the first upper plastic member 21 in the thickness direction of the top-cover assembly 100 may range from 0.1 mm to 0.3 mm (both inclusive).

The part of the first sealing ring 61 positioned in the first hole 103 of the top cover 10 may also be positioned in the second gap W2 between the first guiding chamfer 2121 of the first upper plastic member 21 and the inner wall of the first hole 103 of the top cover 10, and cover at least part of the first guiding chamfer 2121. It can be understood that by positioning part of the first sealing ring 61 positioned in the second gap W2 and covering the at least part of the first guiding chamfer 2121, the first sealing ring 61 can surround the bottom of the first upper plastic member 21 (i.e., the end of the first protrusion 212 facing away from the first upper-plastic-member body 211), thereby increasing the upward extrusion space and the sealing height of the first sealing ring 61. Therefore, the first sealing ring 61 can surround the bottom of the first upper plastic member 21 with a larger area, thereby preventing the metal debris between the top cover 10 and the first terminal-post 41 from moving, and improving the insulation performance between the top cover 10 and the first terminal-post 41.

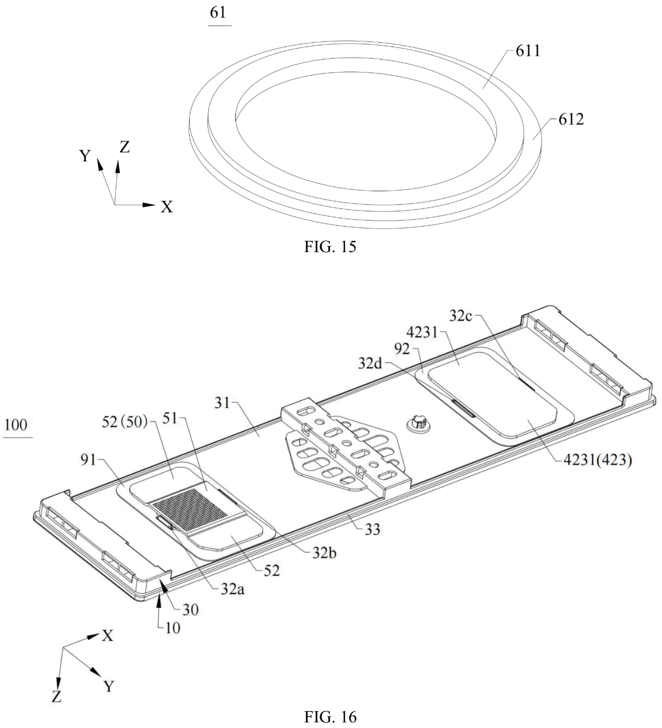

Reference can be made to FIG. 10 and FIG. 15 in combination, where FIG. 15 is a schematic structural view of a first sealing ring 61 of the top-cover assembly 100 illustrated in FIG. 3 from one angle.

The first sealing ring 61 may include a first sub-portion 611 and a second sub-portion 612. The first sub-portion 611 may be sleeved on the first post-body 411 of the first terminal-post 41. The second sub-portion 612 may surround and be connected to the periphery of the first sub-portion 611, and is coaxial with the first sub-portion 611. The thickness of the second sub-portion 612 (i.e., the dimension of the second sub-portion 612 in the Z direction) is smaller than the thickness of the first sub-portion 611 (i.e., the dimension of the first sub-portion 611 in the Z direction), so that a step surface may be formed at the connection between the second sub-portion 612 and the first sub-portion 611. When the first sealing ring 61 is in the first state, the first sub-portion 611 may be separated from the first terminal-post 41, the lower plastic member 30, and the top cover 10, and the second sub-portion 612 may also be separated from the first terminal-post 41, the lower plastic member 30, and the top cover 10. When the first sealing ring 61 is in the second state, the first sub-portion 611 may be positioned in the first hole 103 of the top cover 10 and the first through-hole 313 of the lower plastic member 30, and the second sub-portion 612 may be positioned in the first through-hole 313 of the lower plastic member 30 and the first gap W1 between the lower plastic member 30 and the first base 412 of the first terminal-post 41. The second sub-portion 612 positioned in the first gap W1 may be in interference fit with the top cover 10 in the thickness direction of the top-cover assembly 100.

It can be understood that by allowing the first sealing ring 61 to include the first sub-portion 611 and the second sub-portion 612 with different thicknesses, during the assembly of the top-cover assembly 100, the step formed by the first sealing ring 61 can be utilized to enable the first sealing ring 61 to deform rapidly and fully between the lower plastic member 30 and the first terminal-post 41, as well as between the top cover 10 and the first terminal-post 41. Therefore, the different-sized spaces between the lower plastic member 30 and the first terminal-post 41, and between the top cover 10 and the first terminal-post 41, can be filled, thereby improving the assembly efficiency and sealing performance of the top-cover assembly 100.

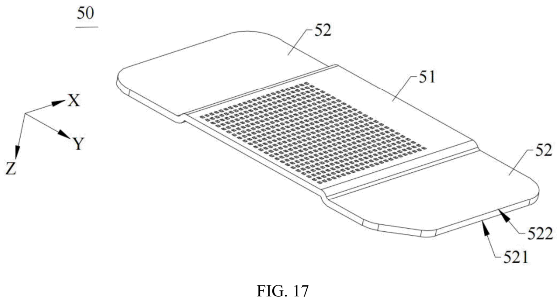

Reference can be made to FIG. 10, FIG. 16, and FIG. 17 in combination, where FIG. 16 is a schematic structural view of the top-cover assembly 100 illustrated in FIG. 3 from another angle, and FIG. 17 is a schematic structural view of a first connecting sheet 50 of the top-cover assembly 100 illustrated in FIG. 16.

The first connecting sheet 50 may be positioned at one side of the lower plastic member 30 facing away from the top cover 10, and is arranged closer to the first side-surface 318 of the lower plastic member 30 than the second connecting sheet 423. The first connecting sheet 50 may cover the first terminal-post 41, and is physically and electrically connected to the first terminal-post 41, as well as physically and electrically connected to the first tab of the electrode assembly 220, so that the electrical connection between the first terminal-post 41 and the electrode assembly 220 can be established through the first connecting sheet 50. That is, the projection of the first terminal-post 41 in the thickness direction of the top-cover assembly 100 may completely fall on the first connecting sheet 50.

The first connecting sheet 50 may be connected to the first terminal-post 41 to form an integrated structure. Exemplarily, the first connecting sheet 50 may be connected to the first terminal-post 41 by means of integral molding to form an integrated structure. Alternatively, the first connecting sheet 50 and the first terminal-post 41 may be arranged and separable, and may be fixed together by the assembly methods such as welding and bonding.

In addition, the first connecting sheet 50 may extend linearly in the Y direction. A centerline O1 of the first connecting sheet 50 in the X direction is offset from a centerline O2 of the first terminal-post 41. That is, the centerline O1 of the first connecting sheet 50 in the X direction may be eccentrically set towards the second side-surface 319 of the lower plastic member 30 relative to the centerline O2 of the first terminal-post 41. In other words, the centerline O1 of the first connecting sheet 50 in the X direction may be eccentrically set with the centerline O2 of the first terminal-post 41. There may be a certain eccentric distance in the X direction between the centerline O1 of the first connecting sheet 50 in the X direction and the centerline O2 of the first terminal-post 41.

It can be understood that the first connecting sheet 50 needs to be welded to both the first terminal-post 41 and the first tab of the electrode assembly 220. Therefore, the centerline O2 of the first terminal-post 41 eccentrically set with the centerline O1 of the first connecting sheet 50 in the X direction can, on the basis of ensuring the connection area and connection strength between the first terminal-post 41 and the first connecting sheet 50, enable the region of the first connecting sheet 50 welded to the first terminal-post 41 and the region of the first connecting sheet 50 welded to the first tab to be distributed on both sides of the first connecting sheet 50 as much as possible and to be staggered. Therefore, when the first connecting sheet 50 and the first tab are welded, difficult connection between the first connecting sheet 50 and the first terminal-post 41 caused by the excessive long first tab blocking the region of the first connecting sheet 50 required to be welded to the first terminal-post 41, can be avoided. In addition, the eccentric arrangement can also meet the spacing between the first terminal-post 41 and the second terminal-post 42, as well as the spacing between the first tab and the second tab, thereby avoiding the interference between the respective tabs and the lower plastic member 30.

In addition, in the length direction of the top-cover assembly 100, the first connecting sheet 50 may also be positioned between the first rib 32a and the second rib 32b of the lower plastic member 30. The first rib 32a of the lower plastic member 30 may exceed the surface of the first connecting sheet 50 positioned facing away from the first terminal-post 41. That is, the first rib 32a of the lower plastic member 30 may be higher than the surface of the first connecting sheet 50 positioned facing away from the first terminal-post 41, so as to play a foolproof role. The second rib 32b of the lower plastic member 30 may exceed the surface of the first connecting sheet 50 positioned facing away from the first terminal-post 41. That is, the second rib 32b of the lower plastic member 30 may be higher than the surface of the first connecting sheet 50 positioned facing away from the first terminal-post 41 to play a foolproof role.

It can be understood that since the distance between the first rib 32a of the lower plastic member 30 and the first through-hole 313 is different from the distance between the second rib 32b and the first through-hole 313, by disposing the first connecting sheet 50 welded to the first terminal-post 41 between the first rib 32a and the second rib 32b of the lower plastic member 30, the first rib 32a and the second rib 32b can be used as a foolproof structure for the first connecting sheet 50, thereby improving the assembly accuracy and assembly precision of the top-cover assembly 100.

Further, the distance between the first rib 32a and the second rib 32b in the length direction of the lower plastic member 30 may be smaller than the dimension of the first connecting sheet 50 in the width direction of the lower plastic member 30. Thus, the first rib 32a and the second rib 32b can cooperate to limit the rotation angle of the first connecting sheet 50 around the central axis of the first terminal-post 41, thereby preventing the failure of the top-cover assembly 100 caused by excessive rotation of the first connecting sheet 50.

In addition, in the length direction of the lower plastic member 30, a distance L1 between the first rib 32a and the first connecting sheet 50 (i.e., the distance between the first rib 32a and the first edge 511 of the first connecting sheet 50) may range from 0.5 mm to 9 mm (both inclusive). In the length direction of the lower plastic member 30, the distance L2 between the second rib 32b and the first connecting sheet 50 (i.e., the distance between the second rib 32b and the second edge 512 of the first connecting sheet 50) may range from 0.5 mm to 9 mm (both inclusive).

The following will take the welding connection between the first connecting sheet 50 and the first terminal-post 41 as an example for illustration, but it may be understood that it is not limited to this.

In this embodiment, the first connecting sheet 50 may include a first terminal-post connecting-portion 51 and two first tab connecting-portions 52. The first terminal-post connecting-portion 51 may cover the first base 412 of the first terminal-post 41 and be welded to the first base 412 of the first terminal-post 41, so that the first connecting sheet 50 is electrically connected to the first terminal-post 41. The two first tab connecting-portions 52 are respectively fixedly connected to both sides of the first terminal-post connecting-portion 51. One first tab connecting-portion 52, the first terminal-post connecting-portion 51, and the other first tab connecting-portion 52 are sequentially connected in the width direction of the top-cover assembly 100 and arranged in a straight line. That is, one first tab connecting-portion 52, the first terminal-post connecting-portion 51, and the other first tab connecting-portion 52 are sequentially connected in the length direction of the first connecting sheet 50 (the Y direction in the figure) and arranged in a straight line. That is, one first tab connecting-portion 52, the first terminal-post connecting-portion 51, and the other first tab connecting-portion 52 are arranged along the same straight line in the length direction of the first connecting sheet 50. Among the two first tab connecting-portions 52, one first tab connecting-portion 52 is welded to the first tab of one cell group of the electrode assembly 220, and the other first tab connecting-portion 52 is welded to the first tab of the other cell group of the electrode assembly 220, so that both the first tabs of the two cell groups can be electrically connected to the first terminal-post 41 through the first connecting sheet 50, thereby further enabling the first connecting sheet 50 to be electrically connected to the electrode assembly 220. The centerline of the first terminal-post connecting-portion 51 in the X direction is coaxial with the centerline O1 of the first connecting sheet 50 in the X direction, and is offset from the centerline O2 of the first terminal-post 41. Exemplarily, the welding method between the first terminal-post connecting-portion 51 and the first terminal-post 41, and the welding method between the first tab connecting-portion 52 and the first tab may both be laser welding.

It can be understood that in the top-cover assembly of the related art, the connecting sheet has a terminal-post connecting region for connection with the terminal post and a tab connecting region for connection with the tab. The terminal-post connecting region and the tab connecting region are arranged in a staggered manner in the length direction of the top-cover assembly, and have less or no overlapping projection region in the width direction of the top-cover assembly. As a result, during the current flowing from the terminal-post connecting region to the tab connecting region, the current can only flow obliquely in an inclined direction of the tab connecting region relative to the terminal-post connecting region (that is, a direction inclined to the width direction of the top-cover assembly), and the flow path of the current is long, leading to low energy efficiency of the battery.

By contrast, in this embodiment, the first terminal-post connecting portion 51 has a certain region connected to the first terminal-post 41 and each of the two first tab connecting portions 52 has a certain region connected to the first tab. Therefore, when the first terminal-post connecting portion 51 and the two first tab connecting portions 52 are connected together and arranged in a line, the region of the first connecting sheet 50 connected to the first terminal-post 41 and the region of the first connecting sheet 50 connected to the first tab can be arranged in the same column or substantially in the same column in the width direction of the top-cover assembly 100. That is, the region of the first connecting sheet 50 connected to the first terminal-post 41 and the region of the first connecting sheet 50 connected to the first tab can have a certain overlapping projection region in the width direction of the top-cover assembly 100. In other words, the region of the first connecting sheet 50 connected to the first tab may have a smaller inclination or no inclination relative to the region of the first connecting sheet 50 connected to the first terminal-post 41. Therefore, the current can flow in a straight-line direction parallel or substantially parallel to the width direction of the top-cover assembly 100 during the current flowing from the region of the first connecting sheet 50 connected to the first tab to the region of the first connecting sheet 50 connected to the first terminal-post 41. Therefore, compared with the oblique flow (the direction inclined to the width direction of the top-cover assembly 100) in the related art, the current flow direction parallel or substantially parallel to the width direction of the top-cover assembly in this embodiment can shorten the current flow path to the greatest extent, thereby reducing the transmission loss of electrical energy and the manufacturing cost, and improving the energy efficiency of the battery 200.

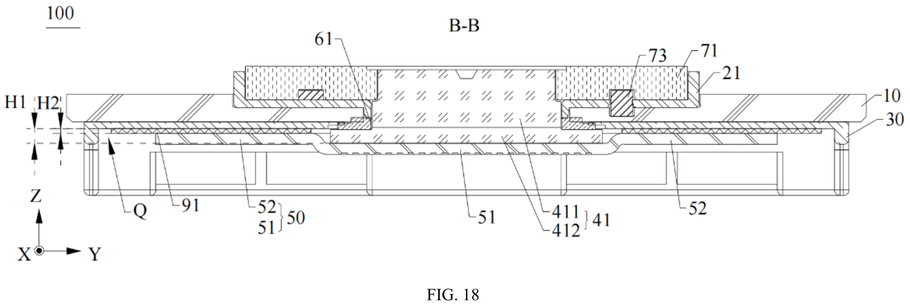

Reference can be made to FIG. 17 and FIG. 18 in combination, where FIG. 18 is a partial cross-sectional view of another structure illustrated in FIG. 3 taken along cutting line B-B.

Each first tab connecting-portion 52 may have a first front surface 521 and a first back surface 522. The first front surface 521 and the first back surface 522 may be positioned facing away from each other in the thickness direction of the first tab connecting-portion 52. The first front surface 521 is positioned facing towards the lower plastic member 30. The first back surface 522 is positioned facing towards the electrode assembly 220. The first terminal-post connecting-portion 51 may be recessed relative to the first front surface 521 of the first tab connecting-portion 52 and protruded relative to the first back surface 522 of the first tab connecting-portion 52.

In this embodiment, the first terminal-post connecting-portion 51 may be recessed relative to the two first tab connecting-portions 52 in the direction towards the electrode assembly 220. Specifically, the surface of each of the two first tab connecting-portions 52 positioned facing towards the electrode assembly 220 is recessed, relative to the surface of the first terminal-post connecting-portion 51 positioned facing towards the electrode assembly 220, towards the top cover 10. A distance H1 between the first terminal-post connecting-portion 51 and the lower plastic member 30 in the thickness direction of the top-cover assembly 100 is larger than a distance H2 between the first tab connecting-portion 52 and the lower plastic member 30 in the thickness direction of the top-cover assembly 100. The first base 412 of the first terminal post 41 is positioned in the gap region between the first terminal-post connecting-portion 51 and the lower plastic member 30, and is welded to the first terminal-post connecting-portion 51.

It can be understood that by recessing the first terminal-post connecting-portion 51 relative to the two first tab connecting-portions 52 in the direction towards the electrode assembly 220, the first connecting sheet 50 as a whole can present an uneven undulation shape. Therefore, a more obvious functional distinction between the first terminal-post connecting-portion 51 and the first tab connecting-portion 52, thereby playing a certain reminder role and effectively avoiding the welding interference caused by the unclear regional partitioning when the first connecting sheet 50 is welded to the first terminal post 41 and the first tab respectively. In addition, there may also be a larger connection area between the first terminal post 41 and the first connecting sheet 50, so as to improve the current-carrying capacity between the first terminal post 41 and the first connecting sheet 50. Moreover, since the two first tab connecting-portions 52 are recessed relative to the electrode assembly 220 towards the top cover 10, the bending space for the first tab of the electrode assembly 220 can be increased.

In addition, compared with the related art where the connecting sheet is first welded to the tab and then welded to the terminal post, in this embodiment, the first connecting sheet 50 is first welded to the first terminal post 41 and then welded to the first tab. Therefore, even if the first tab is too long to cover the first terminal post 41, the connection between the first connecting sheet 50 and the first terminal post 41 is not affected, thereby achieving high compatibility.

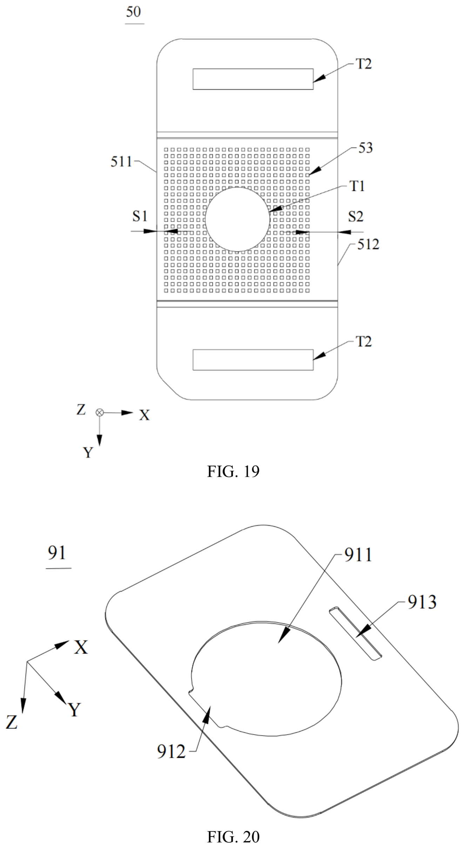

Reference can be made to FIG. 16, FIG. 17, and FIG. 19 in combination, where FIG. 19 is a schematic structural view of the first connecting sheet 50 illustrated in FIG. 17 from another angle.

The first terminal-post connecting-portion 51 may have a first edge 511 and a second edge 512. The first edge 511 and the second edge 512 may be arranged opposite to each other in the width direction (the X direction in the figure) of the first connecting sheet 50, and may also be arranged opposite to each other in the length direction of the top-cover assembly 100. The first edge 511 is positioned facing towards the first side-surface 318 of the lower plastic member 30 and is arranged adjacent to the first side-surface 318. The second edge 512 is positioned facing towards the second side-surface 319 of the lower plastic member 30. In the X direction, a distance between the centerline O2 of the first terminal post 41 and the first edge 511 is different from a distance between the centerline O2 of the first terminal post 41 and the second edge 512.

Exemplarily, in the X direction, the distance between the centerline O2 of the first terminal post 41 and the first edge 511 may be smaller than the distance between the centerline O2 of the first terminal post 41 and the second edge 512. Thus, during the assembly of the top-cover assembly 100, the first edge 511 with a shorter distance from the centerline O2 of the first terminal post 41 may be oriented towards the shorter first rib 32a, and the second edge 512 with a longer distance from the centerline O2 of the first terminal post 41 may be oriented towards the longer second rib 32b for adaptive assembly. With such an arrangement, the first rib 32a and the second rib 32b with different lengths can play a certain visual reminder role during assembly, which is conducive to avoiding the assembly errors of the top-cover assembly 100 caused by the 180° rotation of the first connecting sheet 50 during assembly, thereby improving the assembly accuracy and assembly efficiency of the top-cover assembly 100.

The first connecting sheet 50 may further include an indentation array 53. The indentation array 53 may be disposed on the surface of the first terminal-post connecting-portion 51 positioned facing away from the lower plastic member 30. A minimum distance S1 between the indentation array 53 and the first edge 511 in the length direction of the top-cover assembly 100 may be smaller than a minimum distance S2 between the indentation array 53 and the second edge 512 in the length direction of the top-cover assembly 100, so that the indentation array 53 as a whole can be arranged closer to the first edge 511 of the first terminal-post connecting-portion 51 and away from the second edge 512 of the first terminal-post connecting-portion 51. A projection of the first terminal post 41 on the first connecting sheet 50 in the thickness direction of the top-cover assembly 100 may fall within a region defined by the indentation array 53 on the first connecting sheet 50.

On the one hand, the indentation array 53 can play a positioning role. Thus, during the welding of the first terminal-post connecting-portion 51 and the first terminal-post 41, the first terminal-post connecting-portion 51 can be quickly aligned with the first terminal-post 41, thereby improving the welding efficiency of the first terminal-post connecting-portion 51 and the first terminal-post 41. On the other hand, the indentation array 53 can improve the surface roughness of the first terminal-post connecting-portion 51. Thus, during laser penetration welding between the first terminal-post 41 and the first terminal-post connecting-portion 51, the laser can be prevented from damaging the laser welding head due to specular reflection on the smooth surface of the first terminal-post connecting-portion 51. Instead, the laser can undergo diffuse reflection on the surface of the first terminal-post connecting-portion 51 and rapidly absorb the laser energy, thereby further improving the welding efficiency of the first terminal-post connecting-portion 51 and the first terminal-post 41.

In a possible application scenario, reference can be made to FIG. 19. As illustrated in FIG. 19, a circular region is a welding mark T1 of the first terminal-post connecting-portion 51, and a rectangular region is a welding mark T2 of the first tab connecting-portion 52.

In the width direction of the top-cover assembly 100 (the Y direction in the figure), the welding mark T2 of one first tab connecting-portion 52, the welding mark T1 of the first terminal-post connecting-portion 51, and the welding mark T2 of the other first tab connecting-portion 52 may be arranged in a column and spaced apart from each other in sequence. Thus, during the current flowing from the first tab connecting-portion 52 to the first terminal-post connecting-portion 51, the current can flow linearly in the width direction of the top-cover assembly 100, thereby shortening the current flow path between the first tab connecting-portion 52 and the first terminal-post connecting-portion 51 and improving the energy efficiency of the battery 200.

The welding mark T1 of the first terminal-post connecting-portion 51 may be a solid welding mark. It can be understood that by allowing the welding mark T1 of the first terminal-post connecting-portion 51 to be the solid welding mark, compared with a hollow welding ring in the related art, a larger welding area can be provided between the first connecting sheet 50 and the first terminal-post 41, so that a more stable electrical connection can be established between the first connecting sheet 50 and the first terminal-post 41, thereby improving the current-carrying capacity between the first connecting sheet 50 and the first terminal-post 41.

Reference can be made to FIG. 10, FIG. 16, and FIG. 20 in combination, where FIG. 20 is a schematic structural view of a first heat insulation sheet 91 illustrated in FIG. 16.

In this embodiment, the top-cover assembly 100 may further include a first heat insulation sheet 91. The first heat insulation sheet 91 may be positioned between the lower-plastic-member body 31 of the lower plastic member 30 and the first connecting sheet 50. The first heat insulation sheet 91 is passed through by the first rib 32a of the lower plastic member 30 and the second rib 32b of the lower plastic member 30. That is, the first rib 32a of the lower plastic member 30 and the second rib 32b of the lower plastic member 30 can pass through the first heat insulation sheet 91. The first heat insulation sheet 91 may also be fixedly connected to the lower plastic member 30. A projection of the first connecting sheet 50 on the lower plastic member 30 in the thickness direction of the top-cover assembly 100 falls within a projection of the first heat insulation sheet 91 on the lower plastic member 30 in the thickness direction of the top-cover assembly 100, so as to ensure that the first heat insulation sheet 91 completely covers the first connecting sheet 50. Exemplarily, the first heat insulation sheet 91 may first be coated with adhesive on one side thereof and pre-assembled with the lower plastic member 30, so as to improve the manufacturing efficiency of the top-cover assembly 100.

The first heat insulation sheet 91 may be made of any material with good insulation and electrolyte resistance. Exemplarily, the material of the first heat insulation sheet 91 may be polyethylene terephthalate (PET), polypropylene (PP), or the like. The thickness of the first heat insulation sheet 91 may range from 0.05 mm to 1.0 mm (both inclusive). Exemplarily, the thickness of the first heat insulation sheet 91 may be 0.4 mm.

It can be understood that the first connecting sheet 50 needs to be first welded to the first terminal-post 41 assembled to the lower plastic member 30 first and then welded to the first tab, and the first connecting sheet 50 covers part of the lower-plastic-member body 31 of the lower plastic member 30. Therefore, in order to avoid melting of the lower plastic member 30 caused by high-temperature thermal damage to the lower plastic member 30 when the first connecting sheet 50 is welded to the first tab, the first heat insulation sheet 91 is additionally provided between the lower plastic member 30 and the first connecting sheet 50, so that the first heat insulation sheet 91 can serve as a spacer and play a good heat insulation role between the lower plastic member 30 and the first connecting sheet 50. In addition, the first rib 32a and the second rib 32b of the lower plastic member 30 have different lengths, and the first rib 32a and the second rib 32b pass through the first heat insulation sheet 91, so that the following beneficial effects can be achieved. On the one hand, interference between the first heat insulation sheet 91 and the first rib 32a, as well as between the first heat insulation sheet 91 and the second rib 32b, can be effectively avoided, thereby enabling the first heat insulation sheet 91, the first rib 32a, and the second rib 32b to play their respective roles and have good operating reliability. On the other hand, the first rib 32a and the second rib 32b each can match the length of the opening on the first heat insulation sheet 91, thereby providing a foolproof arrangement for the first heat insulation sheet 91 and achieving efficient assembly.

In addition, if the thickness of the first heat insulation sheet 91 is less than 0.05 mm, slight thermal damage to the lower plastic member 30 may easily occur, thereby adversely affecting the appearance performance and operating reliability of the lower plastic member 30. If the thickness of the first heat insulation sheet 91 is greater than 1.0 mm, the first heat insulation sheet 91 may occupy excessive space in the height direction of the battery 200, resulting in a decrease in the capacity of the battery 200. By setting the thickness of the first heat insulation sheet 91 to range from 0.05 mm to 1.0 mm, the aforementioned problems can be effectively avoided, and the top-cover assembly 100 can have good service life.

Reference can be made to FIG. 20. The first heat insulation sheet 91 may define a first via hole 911, a first avoidance hole 912, and a second avoidance hole 913. The first via hole 911, the first avoidance hole 912, and the second avoidance hole 913 may all extend through the first heat insulation sheet 91 in the thickness direction of the first heat insulation sheet 91 (the Z direction in the figure). The first via hole 911 may be in communication with the first avoidance hole 912 and be spaced apart from the second avoidance hole 913. The first via hole 911 allows for the first terminal-post 41 to pass through. The first avoidance hole 912 allows for the first rib 32a of the lower plastic member 30 to pass through, and the dimension of the first avoidance hole 912 may be adapted to the dimension of the first rib 32a. The second avoidance hole 913 allows for the second rib 32b of the lower plastic member 30 to pass through, and the dimension of the second avoidance hole 913 may be adapted to the dimension of the second rib 32b. The length of the first avoidance hole 912 may be different from the length of the second avoidance hole 913. That is, the dimension of the first avoidance hole 912 in the length direction of the first heat insulation sheet 91 (the Y direction in the figure) is not equal to the dimension of the second avoidance hole 913 in the length direction of the first heat insulation sheet 91.

Exemplarily, the length of the first avoidance hole 912 may be smaller than the length of the second avoidance hole 913. That is, the dimension of the first avoidance hole 912 in the length direction (the Y-direction in the figure) of the first heat insulation sheet 91 is smaller than the dimension of the second avoidance hole 913 in the length direction of the first heat insulation sheet 91.

Reference can be made to FIG. 18. In this embodiment, the first heat insulation sheet 91, part of the first terminal-post 41, and part of the first connecting sheet 50 are all positioned in the accommodating groove Q of the lower plastic member 30.

It can be understood that the lower-plastic-member body 31 and the barrier wall 33 of the lower plastic member 30 may cooperatively define the accommodating groove Q of the lower plastic member 30. Therefore, by accommodating the first heat insulation sheet 91, part of the first terminal-post 41, and part of the first connecting sheet 50 in the accommodating groove Q of the lower plastic member 30, the peripheral barrier wall 33 can play a certain role in blocking and positioning the first heat insulation sheet 91, the first terminal-post 41, and the first connecting sheet 50, thereby preventing the first heat insulation sheet 91, the first terminal-post 41, and the first connecting sheet 50 from slipping off, and improving the connection strength of the top-cover assembly 100. In addition, the accommodating groove Q can protect the first tab and the second tab of the electrode assembly 220, thereby preventing the respective tabs from directly rubbing against the top cover 10 during the manufacturing process.

The above has introduced the structures and assembly relationship of the first terminal-post 41 and the components near the first terminal-post 41. Below, the structures and assembly of the second terminal-post 42 and various components near the second terminal-post 42, such as the second upper plastic member 22, the second pressing ring 72, and the second sealing ring 62, will be described in detail.

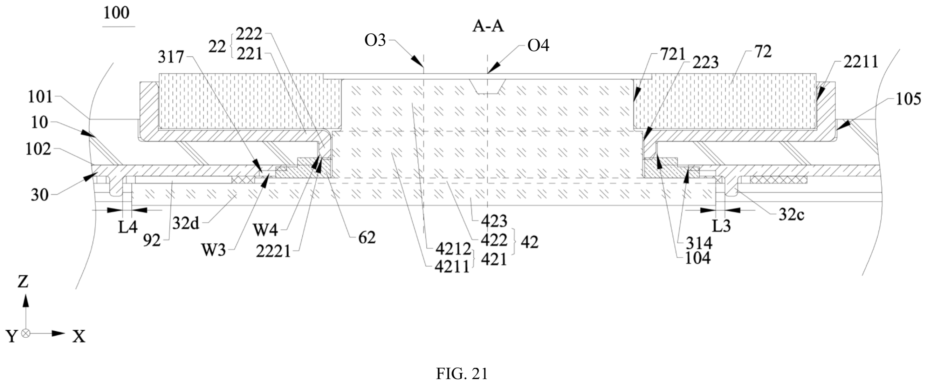

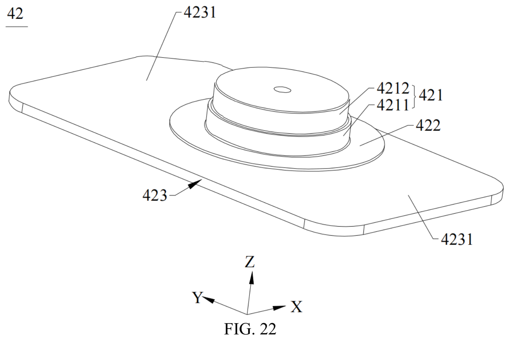

Reference can be made to FIG. 21 and FIG. 22 in combination, where FIG. 21 is a partial schematic cross-sectional view of yet another structure illustrated in FIG. 3 taken along line A-A, and FIG. 22 is a schematic structural view of a second terminal-post 42 of the top-cover assembly 100 illustrated in FIG. 3 from one angle.

In this embodiment, the second terminal-post 42 can pass through the top cover 10 and the lower plastic member 30 and be arranged closer to the second side-surface 319 of the lower plastic member 30 than the first terminal-post 41. The second terminal-post 42 may have an integrated structure. That is, the various structural parts constituting the second terminal-post 42 may be connected to form an integrated structure. The second terminal-post 42 may also have a solid structure. Exemplarily, the material of the second terminal-post 42 may be aluminum. The various structural parts constituting the second terminal-post 42 may be connected to form an integrated structure by means such as integral molding. In some other embodiments, the various structural parts constituting the second terminal-post 42 may also be separable and connected together by the assembly methods such as welding and bonding.

Specifically, the second terminal-post 42 may include a second post-body 421, a second base 422, and a second connecting sheet 423. The second post-body 421 and the second base 422 may be coaxial with and connected to each other. The second base 422 is connected between the second post-body 421 and the second connecting sheet 423. The second post-body 421 may pass through the second hole 104 of the top cover 10 and the second through-hole 314 of the lower plastic member 30. Part of the second post-body 421 may exceed, in the direction away from the top cover 10, the second surface 102 of the top cover 10. Specifically, the second post-body 421 may include a third sub-post 4211 and a fourth sub-post 4212. The third sub-post 4211 and the fourth sub-post 4212 may be coaxial with and connected to each other. The third sub-post 4211 may be connected between the fourth sub-post 4212 and the second base 422. That is, in the height direction of the second terminal-post 42, the second base 422, the third sub-post 4211, and the fourth sub-post 4212 may be connected in sequence. The cross-sectional width of the third sub-post 4211 in the height direction of the second terminal-post 42 (the Z direction in the figure) may be larger than the cross-sectional width of the fourth sub-post 4212 in the height direction of the second terminal-post 42 and smaller than the cross-sectional width of the second base 422 in the height direction of the second terminal-post 42. That is, a projection of the second post-body 421 in the height direction of the second terminal-post 42 may completely fall on the second base 422. The third sub-post 4211 may be positioned in the second hole 104 of the top cover 10 and the second through-hole 314 of the lower plastic member 30. Part of the fourth sub-post 4212 may be positioned in the second hole 104 of the top cover 10, and the remaining part of the fourth sub-post 4212 may exceed the second surface 102 of the top cover 10.

The second base 422 may be positioned at the side of the lower plastic member 30 facing away from the top cover 10 (i.e., the side of the fourth surface 312 of the lower plastic member 30) and define a third gap W3 with the lower plastic member 30. The third gap W3 may surround the second post-body 421. That is, in the thickness direction of the top-cover assembly 100 (the Z direction in the figure), the third gap W3 may be positioned between the top cover 10 and the lower plastic member 30 and surround the outside of the second post-body 421. The projection of the second base 422 on the lower plastic member 30 in the thickness direction of the top-cover assembly 100 (the Z direction in the figure) may partially fall on the lower plastic member 30. That is, in the thickness direction of the top-cover assembly 100, there may be a certain overlapping region between the second base 422 and the lower plastic member 30.

Reference can be made to FIG. 16, FIG. 21, and FIG. 22 in combination. The second connecting sheet 423 may be positioned at the side of the lower plastic member 30 facing away from the top cover 10 (that is, stacked with the lower plastic member 30) and cover the second base 422 and the second post-body 421. The second connecting sheet 423 may also be physically and electrically connected to the second tab of the electrode assembly 220, so that the second terminal-post 42 and the electrode assembly 220 can be electrically connected through the second connecting sheet 423. That is, the projections of the second post-body 421 and the second base 422 in the thickness direction of the top-cover assembly 100 may completely fall on the second connecting sheet 423.

It can be understood that by configuring the second terminal-post 42 as an integrated structure formed by connecting the second connecting sheet 423, the second post-body 421, and the second base 422, the second connecting sheet 423 can be connected to the second post-body 421 and the second base 422 during the molding, thereby eliminating the welding process of the connecting sheet and the terminal post in the related art. Therefore, even if the second tab is too long to cover the second post-body 421 and/or the second base 422, the physical and electrical connection between the second connecting sheet 423 and each of the second post-body 421 and the second base 422 is not affected, thereby achieving high compatibility.

In this embodiment, the second connecting sheet 423 may extend linearly in the Y direction. A centerline O3 of the second connecting sheet 423 in the X direction is offset from a centerline O4 of the second post-body 421. That is, the centerline O3 of the second connecting sheet 423 in the X direction may be eccentrically set towards the second side-surface 319 of the lower plastic member 30 relative to the centerline O4 of the second post-body 421 and a centerline of the second base 422. In other words, the centerline O3 of the second connecting sheet 423 in the X direction can be eccentrically set relative to both the centerline O4 of the second post-body 421 and the centerline of the second base 422. There may be a certain eccentric distance in the X direction between the centerline O3 of the second connecting sheet 423 in the X direction and the centerline O4 of the second post-body 421. There may also be a certain eccentric distance in the X direction between the centerline O3 of the second connecting sheet 423 in the X direction and the centerline of the second base 422.

A distance between the centerline O2 of the first terminal-post 41 and the centerline O4 of the second post-body 421 is larger than a distance between the centerline O1 of the first connecting sheet 50 in the X direction and the centerline O3 of the second connecting sheet 423 in the X direction. That is, a deviation direction of the first connecting sheet 50 relative to the first terminal-post 41 is opposite to a deviation direction of the second connecting sheet 423 relative to the second terminal-post 42, and these two deviation directions are sets facing towards each other, so as to simultaneously meet the spacing between the second post-body 421 and the first post-body 411, as well as the spacing between the second tab and the first tab, thereby avoiding interference between the respective tabs and the lower plastic member 30.

It can be understood that since the second connecting sheet 423 needs to be welded to the second tab of the electrode assembly 220, by eccentrically setting the centerline O4 of the second post-body 421 and the centerline O3 of the second connecting sheet 423 in the X-direction, as well as eccentrically setting the centerline of the second base 422 and the centerline O3 of the second connecting sheet 423 in the X-direction, the region of the second connecting sheet 423 welded to the second tab can be staggered from the second post-body 421 and the second base 422 as much as possible. Therefore, interference with the second post-body 421 and/or the second base 422 caused by the excessive long second tab when the second connecting sheet 423 and the second tab are welded, can be avoided. In addition, the eccentric arrangement can also meet the spacing between the second post-body 421 and the first post-body 411, as well as the spacing between the second tab and the first tab, thereby avoiding the interference between the respective tabs and the lower plastic member 30.

In addition, in the length direction of the top-cover assembly 100, the second connecting sheet 423 may also be positioned between the third rib 32c and the fourth rib 32d of the lower plastic member 30. The third rib 32c of the lower plastic member 30 may exceed the surface of the second connecting sheet 423 positioned facing away from the second post-body 421. That is, the third rib 32c of the lower plastic member 30 may be higher than the surface of the second connecting sheet 423 positioned facing away from the second post-body 421, so as to play a foolproof role. The fourth rib 32d of the lower plastic member 30 may exceed the surface of the second connecting sheet 423 positioned facing away from the second post-body 421. That is, the fourth rib 32d of the lower plastic member 30 may be higher than the surface of the second connecting sheet 423 positioned facing away from the second post-body 421 to play a foolproof role.

It can be understood that since the distance between the third rib 32c of the lower plastic member 30 and the second through-hole 314 is different from the distance between the fourth rib 32d and the second through-hole 314, by disposing the second connecting sheet 423 between the third rib 32c and the fourth rib 32d of the lower plastic member 30, the third rib 32c and the fourth rib 32d can be used as a foolproof structure for the second connecting sheet 423, thereby improving the assembly accuracy and assembly precision of the top-cover assembly 100.

Further, the distance between the third rib 32c and the fourth rib 32d in the length direction of the lower plastic member 30 may be smaller than the dimension of the second connecting sheet 423 in the width direction of the lower plastic member 30. Thus, the third rib 32c and the fourth rib 32d can cooperate to limit the rotation angle of the second connecting sheet 423 around the central axis of the second terminal-post 42, thereby preventing the failure of the top-cover assembly 100 caused by excessive rotation of the second connecting sheet 423.

In addition, in the length direction of the lower plastic member 30, a distance L3 between the third rib 32c and the second connecting sheet 423 (i.e., a distance between the third rib 32c and a third edge of the second connecting sheet 423) may range from 0.5 mm to 9 mm (both inclusive). In the length direction of the lower plastic member 30, a distance L4 between the fourth rib 32d and the second connecting sheet 423 (i.e., a distance between the fourth rib 32d and a fourth edge of the second connecting sheet 423) may range from 0.5 mm to 9 mm (both inclusive).

In this embodiment, the second connecting sheet 423 may be arranged in a straight line in the width direction of the top-cover assembly 100. The second connecting sheet 423 includes two second tab connecting-portions 4231. The two second tab connecting-portions 4231 are respectively positioned at both sides of the second base 422. Among the two second tab connecting-portions 4231, one second tab connecting-portion 4231 is welded to the second tab of one cell group of the electrode assembly 220, and the other second tab connecting-portion 4231 is welded to the second tab of another cell group of the electrode assembly 220. Therefore, the second tabs of the two cell groups can be electrically connected to the second terminal-post 42 through the second connecting sheet 423, and then the second connecting sheet 423 can be electrically connected to the electrode assembly 220. Exemplarily, the welding method between the second tab connecting-portions 4231 and the second tab may both be laser welding.

It can be understood that in the top-cover assembly of the related art, the connecting sheet has a terminal-post connecting region for connection with the terminal post and a tab connecting region for connection with the tab. The terminal-post connecting region and the tab connecting region are arranged in a staggered manner in the length direction of the top-cover assembly, and have less or no overlapping projection region in the width direction of the top-cover assembly. As a result, during the current flowing from the terminal-post connecting region to the tab connecting region, the current can only flow obliquely in an inclined direction of the tab connecting region relative to the terminal-post connecting region (that is, a direction inclined to the width direction of the top-cover assembly), and the flow path of the current is long, leading to low energy efficiency of the battery.

By contrast, in this embodiment, the second connecting sheet 423 has a certain region connected to the second base 422 and a certain region connected to the second tab. Therefore, when the second connecting sheet 423 is arranged in a straight line, the two regions of the second connecting sheet 423, i.e., the region connected to the second base 422 and the region connected to the second tab, can be arranged in the same column or substantially in the same column in the width direction of the top-cover assembly 100. That is, the two regions of the second connecting sheet 423, i.e., the region connected to the second base 422 and the region connected to the second tab, can have a certain overlapping projection region in the width direction of the top-cover assembly 100. In other words, the region of the second connecting sheet 423 connected to the second tab may have a smaller inclination relative to the region of the second connecting sheet 423 connected to the second base 422. Therefore, the current can flow in a straight-line direction parallel or substantially parallel to the width direction of the top-cover assembly 100 during the current flowing from the region of the second connecting sheet 423 connected to the second tab to the region of the second connecting sheet 423 connected to the second base 422. Therefore, compared with the oblique flow (the direction inclined to the width direction of the top-cover assembly 100) in the related art, the current flow direction parallel or substantially parallel to the width direction of the top-cover assembly 100 in this embodiment can shorten the current flow path to the greatest extent, thereby reducing the transmission loss of electrical energy and the manufacturing cost, and improving the energy efficiency of the battery 200.

The second connecting sheet 423 may have a third edge and a fourth edge. The third edge and the fourth edge may be arranged opposite to each other in the width direction of the second connecting sheet 423 (the X direction in the figure), and may also be arranged opposite to each other in the length direction of the top-cover assembly 100. The third edge is positioned facing towards the second side-surface 319 of the lower plastic member 30 and is arranged adjacent to the second side-surface 319. The fourth edge is positioned facing towards the first side-surface 318 of the lower plastic member 30. In the X direction, a distance between the centerline O4 of the second post-body 421 (i.e., the centerline of the second base 422) and the third edge is different from a distance between the centerline O4 of the second post-body 421 and the fourth edge.

Exemplarily, in the X direction, the distance between the centerline O4 of the second post-body 421 and the third edge may be smaller than the distance between the centerline O4 of the second post-body 421 and the fourth edge. Thus, during the assembly process of the top-cover assembly 100, the third edge with a shorter distance from the centerline O4 of the second post-body 421 may be oriented towards the shorter third rib 32c, and the fourth edge with a longer distance from the centerline O4 of the second post-body 421 may be oriented towards the longer fourth rib 32d for adaptive assembly. With such an arrangement, the third rib 32c and the fourth rib 32d with different lengths can play a certain visual reminder role during assembly, which is conducive to avoiding the assembly errors of the top-cover assembly 100 caused by the 180° rotation of the second connecting sheet 423 during assembly, thereby improving the assembly accuracy and assembly efficiency of the top-cover assembly 100.

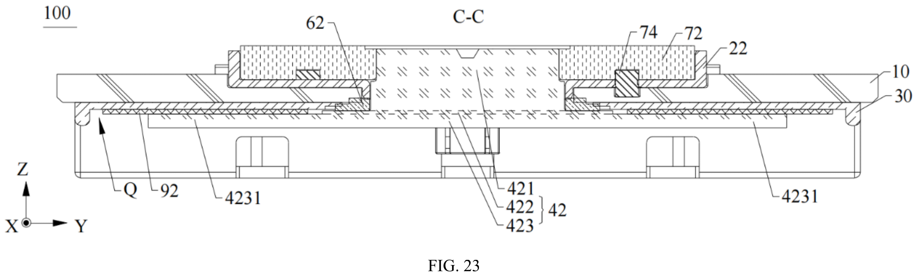

Reference can be made to FIG. 22 and FIG. 23 in combination, where FIG. 23 is a partial schematic cross-sectional view of another structure illustrated in FIG. 3 taken along cutting line C-C.

In this embodiment, in the width direction of the top-cover assembly 100 (the Y direction in the figure), a distance between the second connecting sheet 423 and the fourth surface 312 of the lower plastic member 30 in the thickness direction of the top-cover assembly 100 is the same at each position.

It can be understood that since the second connecting sheet 423 is integrally formed with other parts of the second terminal-post 42, the second connecting sheet 423 may present a flat sheet shape. Therefore, the distance between each position of the second connecting sheet 423 and the lower plastic member 30 can remain unchanged, which is beneficial to reducing the thickness of the top-cover assembly 100 and achieving the thinning and lightening of the top-cover assembly 100.

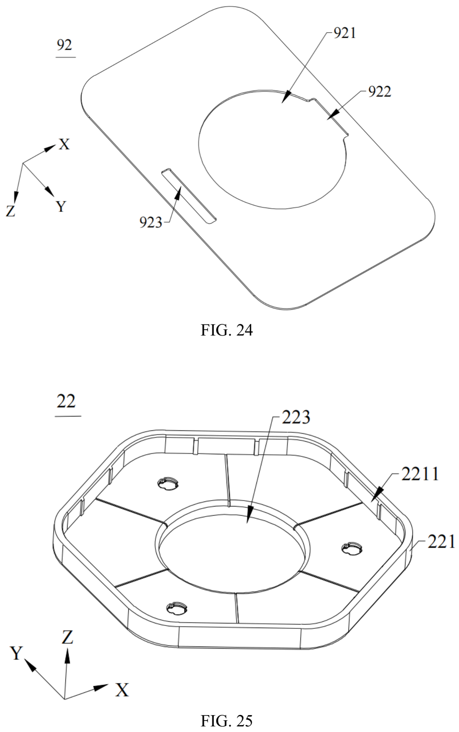

Reference can be made to FIG. 16, FIG. 21, and FIG. 24 in combination, where FIG. 24 is a schematic structural view of a second heat insulation sheet 92 illustrated in FIG. 16.

In this embodiment, the top-cover assembly 100 may further include a second heat insulation sheet 92. The second heat insulation sheet 92 may be positioned between the lower-plastic-member body 31 of the lower plastic member 30 and the second connecting sheet 423. The second heat insulation sheet 92 is passed through by the third rib 32c of the lower plastic member 30 and the fourth rib 32d of the lower plastic member 30. That is, the third rib 32c of the lower plastic member 30 and the fourth rib 32d of the lower plastic member 30 may pass through the second heat insulation sheet 92. The second heat insulation sheet 92 may also be fixedly connected to the lower plastic member 30. A projection of the second connecting sheet 423 on the lower plastic member 30 in the thickness direction of the top-cover assembly 100 falls within a projection of the second heat insulation sheet 92 on the lower plastic member 30 in the thickness direction of the top-cover assembly 100, so as to ensure that the second heat insulation sheet 92 completely covers the second connecting sheet 423. Exemplarily, the second heat insulation sheet 92 may first be coated with adhesive on one side thereof and pre-assembled with the lower plastic member 30, so as to improve the manufacturing efficiency of the top-cover assembly 100.

The second heat insulation sheet 92 may be made of any material with good insulation and electrolyte resistance. Exemplarily, the material of the second heat insulation sheet 92 may be PET, PP, or the like. The thickness of the second heat insulation sheet 92 may range from 0.05 mm to 1.0 mm (both inclusive). Exemplarily, the thickness of the second heat insulation sheet 92 may be 0.4 mm.

It can be understood that the second connecting sheet 423 needs to be welded to the second tab, and the second connecting sheet 423 covers part of the lower-plastic-member body 31 of the lower plastic member 30. Therefore, in order to avoid melting of the lower plastic member 30 caused by high-temperature thermal damage to the lower plastic member 30 when the second connecting sheet 423 is welded to the second tab, the second heat insulation sheet 92 is additionally provided between the lower plastic member 30 and the second connecting sheet 423, so that the second heat insulation sheet 92 can serve as a spacer and play a good heat insulation role between the lower plastic member 30 and the second connecting sheet 423. In addition, the third rib 32c and the fourth rib 32d of the lower plastic member 30 have different lengths, and the third rib 32c and the fourth rib 32d pass through the second heat insulation sheet 92, so that the following beneficial effects can be achieved. On the one hand, interference between the second heat insulation sheet 92 and the third rib 32c, as well as between the second heat insulation sheet 92 and the fourth rib 32d, can be effectively avoided, thereby enabling the second heat insulation sheet 92, the third rib 32c, and the fourth rib 32d to play their respective roles and have good operating reliability. On the other hand, the third rib 32c and the fourth rib 32d each can match the length of the opening on the second heat insulation sheet 92, thereby providing a foolproof arrangement of the second heat insulation sheet 92 and achieving efficient assembly.

In addition, if the thickness of the second heat insulation sheet 92 is less than 0.05 mm, slight thermal damage to the lower plastic member 30 may easily occur, thereby adversely affecting the appearance performance and operating reliability of the lower plastic member 30. If the thickness of the second heat insulation sheet 92 is greater than 1.0 mm, the second heat insulation sheet 92 may occupy excessive space in the height direction of the battery 200, resulting in a decrease in the capacity of the battery 200. By setting the second heat insulation sheet 92 to range from 0.05 mm to 1.0 mm, the aforementioned problems can be effectively avoided, and the top-cover assembly 100 can have good service life.

Reference can be made to FIG. 24. The second heat insulation sheet 92 may define a second via hole 921, a third avoidance hole 922, and a fourth avoidance hole 923. The second via hole 921, the third avoidance hole 922, and the fourth avoidance hole 923 may all extend through the second heat insulation sheet 92 in the thickness direction of the second heat insulation sheet 92 (the Z direction in the figure). The second via hole 921 may be in communication with the third avoidance hole 922 and be spaced apart from the fourth avoidance hole 923. The second via hole 921 allows for the second terminal-post 42 to pass through. The third avoidance hole 922 allows for the third rib 32c of the lower plastic member 30 to pass through, and the dimension of the third avoidance hole 922 may be adapted to the dimension of the third rib 32c. The fourth avoidance hole 923 allows for the fourth rib 32d of the lower plastic member 30 to pass through, and the dimension of the fourth avoidance hole 923 may be adapted to the dimension of the fourth rib 32d. The length of the third avoidance hole 922 may be different from the length of the fourth avoidance hole 923. That is, the dimension of the third avoidance hole 922 in the length direction of the second heat insulation sheet 92 (the Y direction in the figure) is not equal to the dimension of the fourth avoidance hole 923 in the length direction of the second heat insulation sheet 92.

Exemplarily, the length of the third avoidance hole 922 may be smaller than the length of the fourth avoidance hole 923. That is, the dimension of the third avoidance hole 922 in the length direction of the second heat insulation sheet 92 (the Y direction in the figure) is smaller than the dimension of the fourth avoidance hole 923 in the length direction of the second heat insulation sheet 92.

Reference can be made to FIG. 23. In this embodiment, the second heat insulation sheet 92, part of the second base 422, and part of the second connecting sheet 423 are all positioned in the accommodating groove Q of the lower plastic member 30.

It can be understood that the lower-plastic-member body 31 and the barrier wall 33 of the lower plastic member 30 may cooperatively define the accommodating groove Q of the lower plastic member 30. Therefore, by accommodating the second heat insulation sheet 92, part of the second base 422, and part of the second connecting sheet 423 in the accommodating groove Q of the lower plastic member 30, the peripheral barrier wall 33 can play a certain role in blocking and positioning the second heat insulation sheet 92 and the second terminal-post 42, thereby preventing the second heat insulation sheet 92 and the second terminal-post 42 from slipping off and improving the connection strength of the top-cover assembly 100. In addition, the accommodating groove Q can protect the first tab and the second tab of the electrode assembly 220, thereby preventing the respective tabs from directly rubbing against the top cover 10 during the manufacturing process.

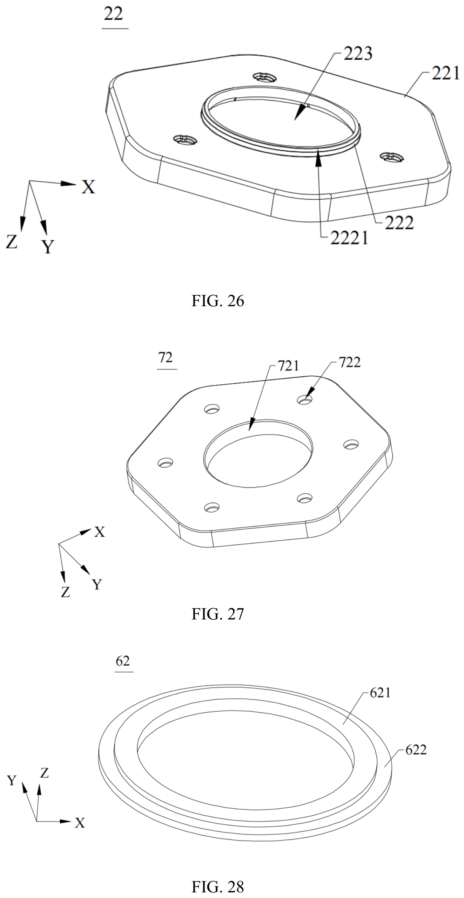

Reference can be made to FIG. 21, FIG. 25, and FIG. 26 in combination, where FIG. 25 is a schematic structural view of a second upper plastic member 22 of the top-cover assembly 100 illustrated in FIG. 3 from one angle, and FIG. 26 is a schematic structural view of the second upper plastic member 22 of the top-cover assembly 100 illustrated in FIG. 3 from another angle.

The second upper plastic member 22 may be sleeved on the second terminal-post 42 and positioned between the top cover 10 and the second terminal-post 42. Specifically, the second upper plastic member 22 may include a second upper-plastic-member body 221 and a second protrusion 222. The second upper-plastic-member body 221 and the second protrusion 222 may be coaxial with and connected to each other. The cross-sectional width of the second upper-plastic-member body 221 in the thickness direction of the second upper plastic member 22 (the Z direction in the figure) may be larger than the cross-sectional width of the second protrusion 222 in the thickness direction of the top cover 10.

The second upper plastic member 22 may define a fifth through-hole 223. The fifth through-hole 223 may extend through the second upper plastic member 22 in the thickness direction of the second upper plastic member 22 (the Z direction in the figure). That is, the fifth through-hole 223 may extend through the second upper-plastic-member body 221 and the second protrusion 222 in the thickness direction of the second upper plastic member 22. Part of the third sub-post 4211 and at least part of the fourth sub-post 4212 of the second terminal-post 42 may be positioned in the fifth through-hole 223.

The second upper-plastic-member body 221 may be mounted in the second mounting groove 106 of the top cover 10. Part of the second upper-plastic-member body 221 is positioned in the second mounting groove 106 of the top cover 10, and the remaining part of the second upper-plastic-member body 221 exceeds, in a direction away from the lower plastic member 30, the first surface 101 of the top cover 10. That is, the second upper-plastic-member body 221 may be positioned at the side of the top cover 10 facing away from the lower plastic member 30 and also sleeved on the second post-body 421 of the second terminal-post 42.

The second upper-plastic-member body 221 may define a fourth mounting groove 2211. An opening of the fourth mounting groove 2211 may be positioned on the surface of the second upper-plastic-member body 221 facing away from the second protrusion 222. The fourth mounting groove 2211 may be recessed from the surface of the second upper-plastic-member body 221 positioned facing away from the second protrusion 222 into the interior of the second upper plastic member 22. The fourth mounting groove 2211 may be coaxial with the fifth through-hole 223. The cross-sectional width of the fourth mounting groove 2211 in the thickness direction of the second upper plastic member 22 may be larger than the cross-sectional width of the fifth through-hole 223 in the thickness direction of the top cover 10.

One end of the second protrusion 222 is fixedly connected to the second upper-plastic-member body 221, and the other end of the second protrusion 222 extends in a direction away from the second upper-plastic-member body 221. The second protrusion 222 may be positioned in the second hole 104 of the top cover 10 and also surround the outside of the second post-body 421 of the second terminal-post 42. One end of the second protrusion 222 positioned facing away from the second upper-plastic-member body 221 may be provided with a second guiding chamfer 2221. The second guiding chamfer 2221 may serve as part of the outer surface of the second protrusion 222 and be inclined in a direction from the top cover 10 to the second terminal-post 42. A fourth gap W4 may be defined between the second guiding chamfer 2221 and an inner wall of the second hole 104. Exemplarily, the second guiding chamfer 2221 may be arranged around one end of the second protrusion 222 positioned facing away from the second upper-plastic-member body 221, in a circumferential direction of the second protrusion 222.

Reference can be made to FIG. 21 and FIG. 27 in combination, where FIG. 27 is a schematic structural view of a second pressing ring 72 of the top-cover assembly 100 illustrated in FIG. 3 from one angle.

The second pressing ring 72 may be mounted in the fourth mounting groove 2211 of the second upper-plastic-member body 221, sleeved on the second post-body 421 of the second terminal-post 42, and electrically connected to the second terminal-post 42. Part of the second pressing ring 72 may be positioned in the fourth mounting groove 2211 of the second upper-plastic-member body 221, and the remaining part of the second pressing ring 72 may exceed, in a direction away from the second protrusion 222, the surface of the second upper-plastic-member body 221 positioned facing away from the second protrusion 222.

The second pressing ring 72 may define a sixth through-hole 721. The sixth through-hole 721 may extend through the second pressing ring 72 in the thickness direction (the Z direction in the figure) of the second pressing ring 72. The second pressing ring 72 may surround the fourth sub-post 4212 of the second terminal-post 42. That is, the fourth sub-post 4212 of the second terminal-post 42 may be positioned in the sixth through-hole 721.

The second pressing ring 72 may define a fourth limiting hole 722. An opening of the fourth limiting hole 722 may be positioned on the surface of the second pressing ring 72 facing towards the second upper plastic member 22. The fourth limiting hole 722 may be recessed from the surface of the second pressing ring 72 facing towards the second upper plastic member 22 towards the inside of the second pressing ring 72. The fourth limiting hole 722 may be positioned at the outer edge of the sixth through-hole 721. The fourth limiting hole 722 is a blind hole. The number of the fourth limiting holes 722 may be multiple. The structures of the multiple fourth limiting holes 722 may be similar, the same, or different. The multiple fourth limiting holes 722 may be arranged at intervals on the surface of the second pressing ring 72 facing towards the second upper plastic member 22. Further, the multiple fourth limiting holes 722 may also be arranged at intervals in the circumferential direction of the sixth through-hole 721.

Exemplarily, the number of the fourth limiting holes 722 may be six. The six fourth limiting holes 722 may be arranged at intervals on the surface of the second pressing ring 72 facing towards the second upper plastic member 22, positioned at the periphery of the sixth through-hole 721, and arranged in sequence in the circumferential direction of the sixth through-hole 721.

Reference can be made to FIG. 3 and FIG. 4 in combination. The second limiting body 74 may pass through the second upper plastic member 22. One end of the second limiting body 74 is positioned in the second limiting hole 108 of the top cover 10, and the other end of the second limiting body 74 is positioned in the fourth limiting hole 722 of the top cover 10. The second limiting body 74 can be used to support the second pressing ring 72 and limit the circumferential rotation of the second pressing ring 72 relative to the second upper plastic member 22. Exemplarily, the number of the second limiting bodies 74 may be six. The six second limiting bodies 74 can pass through the second upper plastic member 22 and be arranged at intervals between the top cover 10 and the second pressing ring 72.

In this embodiment, the second sealing ring 62 may have good elastic deformation performance. The second sealing ring 62 can undergo elastic deformation after being compressed and rebound after the pressure is removed. The second sealing ring 62 may have a third state and a fourth state. When the second sealing ring 62 is in the third state, the second sealing ring 62 is separated from both the lower plastic member 30 and the top cover 10. When the second sealing ring 62 is in the fourth state, the second sealing ring 62 is sleeved on the second post-body 421 of the second terminal-post 42, and is positioned in the second hole 104 of the top cover 10, the second through-hole 314 of the lower plastic member 30, and the third gap W3 between the lower plastic member 30 and the second base 422 of the second terminal-post 42. That is, when the second sealing ring 62 is in the third state, the second sealing ring 62 is in an uncompressed natural state. When the second sealing ring 62 is in the fourth state, the second sealing ring 62 is in a compressed state under pressure. The following will take the second sealing ring 62 in the fourth state as an example for illustration, but it may be understood that it is not limited thereto.

Reference can be made to FIG. 21. The second sealing ring 62 may be sleeved on the second post-body 421 of the second terminal-post 42, and is positioned in the second hole 104 of the top cover 10, the second through-hole 314 of the lower plastic member 30, and the third gap W3 between the lower plastic member 30 and the second base 422 of the second terminal-post 42. The second sealing ring 62 position in the third gap W3 is in interference fit with the lower plastic member 30 in the thickness direction (the Z direction in the figure) of the top-cover assembly 100. Exemplarily, the interference amount of the second sealing ring 62 positioned in the third gap W3 and the lower plastic member 30 in the thickness direction of the top-cover assembly 100 may be 0.1 mm.

Further, the second thinning groove 317 of the lower plastic member 30 may define part of the third gap W3. Part of the second sealing ring 62 position in the second thinning groove 317 is in interference fit with the lower plastic member 30.

In this embodiment, in the length direction (the X direction in the figure) of the top-cover assembly 100, the overlapping length of the second sealing ring 62 and the lower plastic member 30 may be greater than or equal to 0.2 mm.

Reference can continue to be made to FIG. 21. The second sealing ring 62 may be in contact with the inner wall of the second hole 104 of the top cover 10, the inner wall of the second through-hole 314 of the lower plastic member 30, the bottom wall of the second thinning groove 317, and part of the second surface 102 of the top cover 10. Part of the second sealing ring 62 positioned in the second hole 104 of the top cover 10 is in interference fit with the top cover 10 in the radial direction of the second sealing ring 62. Part of the second sealing ring 62 positioned in the second through-hole 314 of the lower plastic member 30 is in interference fit with the lower plastic member 30 in the radial direction of the second sealing ring 62.

The part of the second sealing ring 62 positioned in the second hole 104 of the top cover 10 may be in contact with one end of the second protrusion 222 facing away from the second upper-plastic-member body 221. Further, the part of the second sealing ring 62 positioned in the second hole 104 of the top cover 10 may be in interference fit with the end of the second protrusion 222 facing away from the second upper-plastic-member body 221. The interference amount (i.e., the interference distance) between the second sealing ring 62 and the second upper plastic member 22 in the thickness direction of the top-cover assembly 100 may range from 0.1 mm to 0.3 mm (both inclusive).

The part of the second sealing ring 62 positioned in the second hole 104 of the top cover 10 may also be positioned in the fourth gap W4 between the second guiding chamfer 2221 of the second upper plastic member 22 and the inner wall of the second hole 104 of the top cover 10, and cover at least part of the second guiding chamfer 2221.

Reference can be made to FIG. 21 and FIG. 28 in combination, where is a schematic structural view of a second sealing ring 62 of the top-cover assembly illustrated in FIG. 3 from one angle.

The second sealing ring 62 may include a third sub-portion 621 and a fourth sub-portion 622. The third sub-portion 621 may be sleeved on the second post-body 421 of the second terminal-post 42. The fourth sub-portion 622 may surround and be connected to the periphery of the third sub-portion 621, and is coaxial with the third sub-portion 621. The thickness of the fourth sub-portion 622 (i.e., the dimension of the fourth sub-portion 622 in the Z direction) is smaller than the thickness of the third sub-portion 621 (i.e., the dimension of the third sub-portion 621 in the Z direction), so that a stepped surface may be formed at the connection between the fourth sub-portion 622 and the third sub-portion 621. When the second sealing ring 62 is in the third state, the third sub-portion 621 may be separated from the second terminal-post 42, the lower plastic member 30, and the top cover 10, and the fourth sub-portion 622 may be separated from the second terminal-post 42, the lower plastic member 30, and the top cover 10. When the second sealing ring 62 is in the fourth state, the third sub-portion 621 may be positioned in the second hole 104 of the top cover 10 and the second through-hole 314 of the lower plastic member 30, and the fourth sub-portion 622 may be positioned in the second through-hole 314 of the lower plastic member 30 and the third gap W3 between the lower plastic member 30 and the second base 422 of the second terminal-post 42. The fourth sub-portion 622 positioned in the third gap W3 may be in interference fit with the top cover 10 in the thickness direction of the top-cover assembly 100.

In this embodiment, the same content as that in FIG. 3 will not be repeated. The difference from FIG. 3 is that the structures of the lower plastic member 30, the first heat insulation sheet 91, the second heat insulation sheet 92, and the second terminal-post 42 are respectively different from those in FIG. 3, which will be specifically described in detail below. In addition, the description of the structural improvement of the top-cover assembly 100 in this embodiment may, where not in conflict, also be applied to the above-mentioned FIG. 3.

The lower plastic member 30 is as follows.

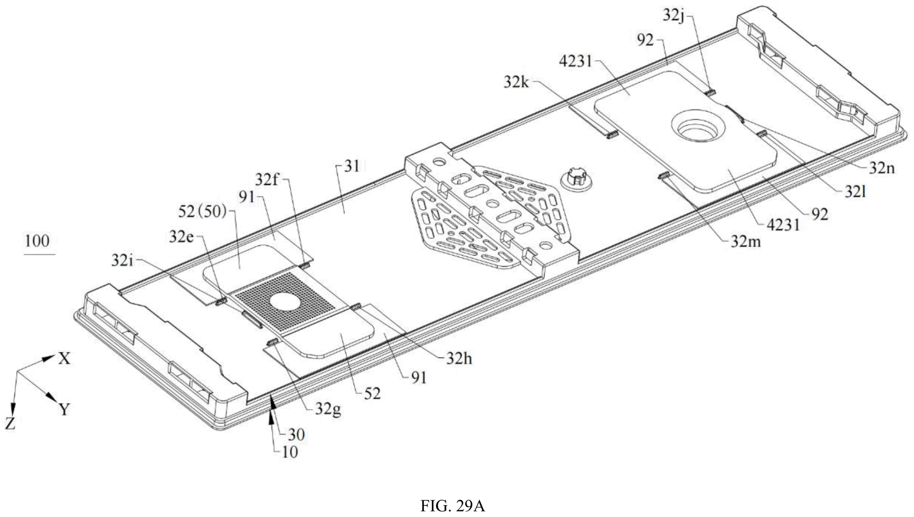

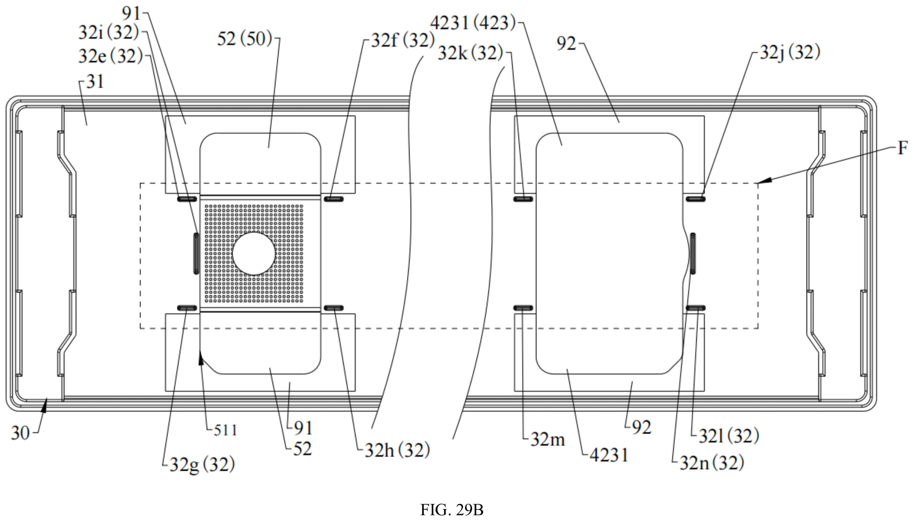

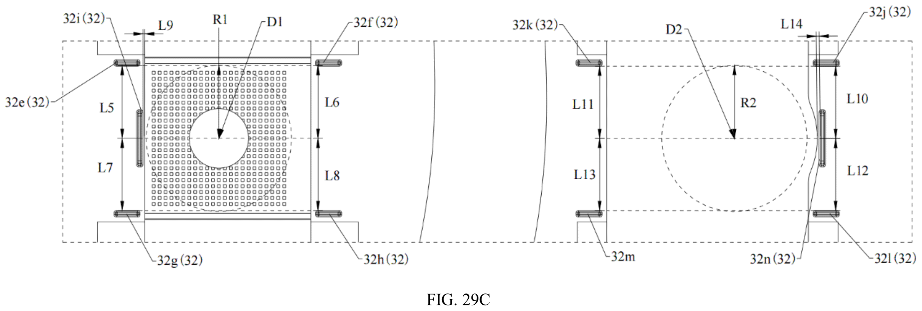

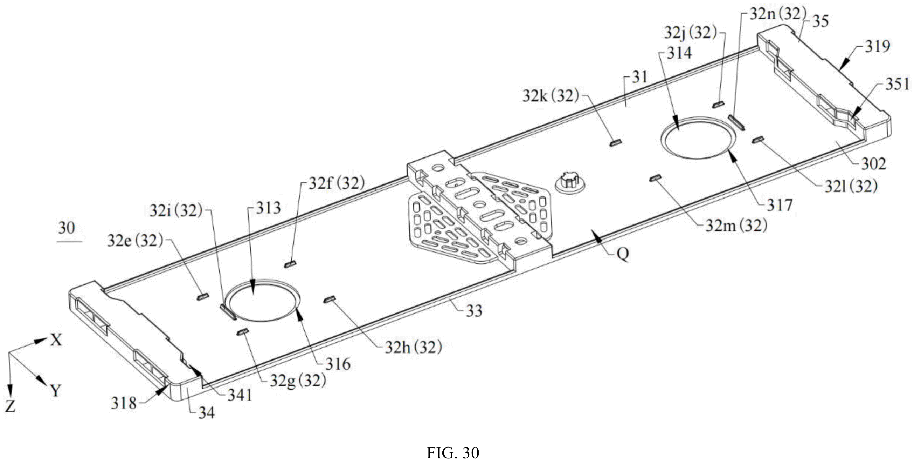

Reference can be made to FIG. 29A, FIG. 29B, FIG. 29C, and FIG. 30 in combination, where FIG. 29A is a schematic structural view of a top-cover assembly 100 provided in another embodiment of the present disclosure from one angle, FIG. 29B is a schematic structural view of a top-cover assembly 100 provided in FIG. 29A of the present disclosure from another angle, FIG. 29C is an enlarged schematic view of Region F illustrated in FIG. 29B, and FIG. 30 is a schematic structural view of a lower plastic member 30 of the top-cover assembly 100 illustrated in FIG. 29A.

The differences between the lower plastic member 30 in FIG. 29A and the lower plastic member 30 in FIG. 3 will be described below, while the identical aspects may be referred to in the relevant description of FIG. 3 and will not be repeated here.

The at least one rib 32 of the lower plastic member 30 includes a first rib 32e, a second rib 32f, a third rib 32g, a fourth rib 32h, a fifth rib 32i, a sixth rib 32j, a seventh rib 32k, an eighth rib 321, a ninth rib 32m, and a tenth rib 32n. The first rib 32e, the second rib 32f, the third rib 32g, the fourth rib 32h, and the fifth rib 32i may all be fixedly connected to the fourth surface 312 of the lower-plastic-member body 31, and all protrude towards the electrode assembly 220 relative to the fourth surface 312 of the lower-plastic-member body 31, and are all arranged at the periphery of the first through-hole 313. The sixth rib 32j, the seventh rib 32k, the eighth rib 321, the ninth rib 32m, and the tenth rib 32n may all be fixedly connected to the fourth surface 312 of the lower-plastic-member body 31, and all protrude towards the electrode assembly 220 relative to the fourth surface 312 of the lower-plastic-member body 31, and are all arranged at the periphery of the second through-hole 314.

Specifically, the first rib 32e and the second rib 32f may both be positioned on one side of the lower plastic member 30 in the width direction (the Y direction in the figure). Both the first rib 32e and the second rib 32f extend in the length direction of the lower plastic member 30 (the X direction in the figure), and are arranged opposite to and spaced apart from each other in the length direction of the lower plastic member 30. Both the third rib 32g and the fourth rib 32h are positioned at the other side of the lower plastic member 30 in the width direction of the lower plastic member 30. Both the third rib 32g and the fourth rib 32h extend in the length direction of the lower plastic member 30, and are arranged opposite to and spaced apart from each other in the length direction of the lower plastic member 30. The third rib 32g is also arranged opposite to and spaced apart from the first rib 32e in the width direction of the lower plastic member 30. The fourth rib 32h is also arranged opposite to and spaced apart from the second rib 32f in the width direction of the lower plastic member 30. The fifth rib 32i extends in the width direction of the lower plastic member 30. In the width direction of the lower plastic member 30 (the Y direction in the figure), the first rib 32e, the fifth rib 32i, and the third rib 32g are arranged in sequence.

The first connecting sheet 50 may be positioned in a gap region between the fifth rib 32i and each of the second rib 32f and the fourth rib 32h, and abuts against the fifth rib 32i. The length of the fifth rib 32i may be larger than each of the length of the first rib 32e, the length of the second rib 32f, the length of the third rib 32g, and the length of the fourth rib 32h. In other embodiments, the length of the fifth rib 32i may also be smaller than each of the length of the first rib 32e, the length of the second rib 32f, the length of the third rib 32g, and the length of the fourth rib 32h, or the same as each of the length of the first rib 32e, the length of the second rib 32f, the length of the third rib 32g, and the length of the fourth rib 32h, which is not strictly limited.

In addition, in the width direction of the lower plastic member 30, a distance L5 between the first rib 32e and a centerline D1 of the first through-hole 313 in the length direction of the lower plastic member 30 satisfies: (R1 + 0.5 mm) ≤ L5 ≤ (R1 + 5 mm).

In the width direction of the lower plastic member 30, a distance L6 between the second rib 32f and the centerline D1 of the first through-hole 313 in the length direction of the lower plastic member 30 satisfies: (R1 + 0.5 mm) ≤ L6 ≤ (R1 + 5 mm).

In the width direction of the lower plastic member 30, a distance L7 between the third rib 32g and the centerline D1 of the first through-hole 313 in the length direction of the lower plastic member 30 satisfies: (R1 + 0.5 mm) ≤ L7 ≤ (R1 + 5 mm).

In the width direction of the lower plastic member 30, a distance L8 between the fourth rib 32h and the centerline D1 of the first through-hole 313 in the length direction of the lower plastic member 30 satisfies: (R1 + 0.5 mm) ≤ L8 ≤ (R1 + 5 mm).

In the length direction of the lower plastic member 30, a distance between the first rib 32e and the first edge 511 of the first connecting sheet 50 may be greater than or equal to 0.5 mm.

In the length direction of the lower plastic member 30, a distance between the second rib 32f and the second edge 512 of the first connecting sheet 50 may be greater than or equal to 0.5 mm.

In the length direction of the lower plastic member 30, a distance between the third rib 32g and the first edge 511 of the first connecting sheet 50 may be greater than or equal to 0.5 mm.

In the length direction of the lower plastic member 30, a distance between the fourth rib 32h and the second edge 512 of the first connecting sheet 50 may be greater than or equal to 0.5 mm.

In the length direction of the lower plastic member 30, a distance L9 between the fifth rib 32i and the first connecting sheet 50 (i.e., a distance between the fifth rib 32i and the first edge 511 of the first connecting sheet 50) ranges from 0.5 mm to 9 mm.

R1 is a radius of part of the first terminal-post 41 connected to the first connecting sheet 50 (i.e., the radius of the first base 412). In addition, the above-listed dimensional ranges all include the endpoint values of the two endpoints.

It can be understood that by providing the multiple ribs and arranging the first connecting sheet 50 welded to the first terminal-post 41 between the fifth rib 32i of the lower plastic member 30 and each of the second rib 32f and the fourth rib 32h of the lower plastic member 30, the second rib 32f, the fourth rib 32h, and the fifth rib 32i can cooperate to serve as a foolproof arrangement for the first connecting sheet 50. Therefore, the first connecting sheet 50 is prevented from being turned over and thus the failure of the top-cover assembly 100 is prevented, thereby improving the assembly accuracy and precision of the top-cover assembly 100.

Both the sixth rib 32j and the seventh rib 32k may be positioned at one side of the lower plastic member 30 in the width direction of the lower plastic member 30 (the Y-direction in the figure). Both the sixth rib 32j and the seventh rib 32k extend in the length direction of the lower plastic member 30 (the X-direction in the figure) and are arranged opposite and spaced apart in the length direction of the lower plastic member 30. Both the eighth rib 321 and the ninth rib 32m are positioned at the other side of the lower plastic member 30 in the width direction of the lower plastic member 30. Both the eighth rib 321 and the ninth rib 32m extend in the length direction of the lower plastic member 30 and are arranged opposite and spaced apart in the length direction of the lower plastic member 30. The eighth rib 32l is also arranged opposite to and spaced apart from the sixth rib 32j in the width direction of the lower plastic member 30. The ninth rib 32m is also arranged opposite to and spaced apart from the seventh rib 32k in the width direction of the lower plastic member 30. The tenth rib 32n extends in the width direction of the lower plastic member 30. In the width direction of the lower plastic member 30 (the Y-direction in the figure), the sixth rib 32j, the tenth rib 32n, and the eighth rib 321 are arranged in sequence.

The second connecting sheet 423 may be positioned in a gap region between the tenth rib 32n and each of the seventh rib 32k the ninth rib 32m. The length of the tenth rib 32n may be larger than each of the length of the sixth rib 32j, the length of the seventh rib 32k, the length of the eighth rib 321, and the length of the ninth rib 32m. In other embodiments, the length of the tenth rib 32n may also be smaller than each of the length of the sixth rib 32j, the length of the seventh rib 32k, the length of the eighth rib 32l, and the length of the ninth rib 32m, or the same as each of the length of the sixth rib 32j, the length of the seventh rib 32k, the length of the eighth rib 321, and the length of the ninth rib 32m, which is not strictly limited.

In addition, in the width direction of the lower plastic member 30, a distance L10 between the sixth rib 32j and a centerline D2 of the second through-hole 314 in the length direction of the lower plastic member 30 satisfies: (R2 + 0.5 mm) ≤ L10 ≤ (R2 + 5 mm).

In the width direction of the lower plastic member 30, a distance L11 between the seventh rib 32k and the centerline D2 of the second through-hole 314 in the length direction of the lower plastic member 30 satisfies: (R2 + 0.5 mm) ≤ L11 ≤ (R2 + 5 mm).

In the width direction of the lower plastic member 30, a distance L12 between the eighth rib 321 and the centerline D2 of the second through-hole 314 in the length direction of the lower plastic member 30 satisfies: (R2 + 0.5 mm) ≤ L12 ≤ (R2 + 5 mm).

In the width direction of the lower plastic member 30, a distance L13 between the ninth rib 32m and the centerline D2 of the second through-hole 314 in the length direction of the lower plastic member 30 satisfies: (R2 + 0.5 mm) ≤ L13 ≤ (R2 + 5 mm).

In the length direction of the lower plastic member 30, a distance between the sixth rib 32j and the third edge of the second connecting sheet 423 may be greater than or equal to 0.5 mm.

In the length direction of the lower plastic member 30, a distance between the seventh rib 32k and the fourth edge of the second connecting sheet 423 may be greater than or equal to 0.5 mm.

In the length direction of the lower plastic member 30, a distance between the eighth rib 321 and the third edge of the second connecting sheet 423 may be greater than or equal to 0.5 mm.

In the length direction of the lower plastic member 30, a distance between the ninth rib 32m and the fourth edge of the second connecting sheet 423 may be greater than or equal to 0.5 mm.

In the length direction of the lower plastic member 30, a distance L14 between the tenth rib 32n and the second connecting sheet 423 (i.e., a distance between the tenth rib 32n and the third edge of the second connecting sheet 423) ranges from 0.5 mm to 9 mm.

R2 is a radius of part of the second post-body 421 connected to the second connecting sheet 423 (i.e., the radius of the second base 422). In addition, the above-listed dimensional ranges all include the endpoint values of the two endpoints.

It can be understood that by providing the multiple ribs and arranging the second connecting sheet 423 of the second terminal-post 42 between the tenth rib 32n of the lower plastic member 30 and each of the seventh rib 32k and the ninth rib 32m of the lower plastic member 30, the seventh rib 32k, the ninth rib 32m, and the tenth rib 32n can cooperate to serve as a foolproof arrangement for the second connecting sheet 423. Therefore, when the second connecting sheet 423 is rotated (e.g., rotated by 90°, 180°, or other angles) during assembly, the problem in which the second tab connecting-portion 4231 cannot be welded to the second tab of the electrode assembly 220 due to the change in position of the second tab connecting-portion 4231, can be prevented, thereby avoiding the failure of the top-cover assembly 100 and improving the assembly accuracy and precision of the top-cover assembly 100.

Reference can continue to be made to FIG. 29 and FIG. 30. The first boss 34 of the lower plastic member 30 defines at least one first recess 341 at one side of the first boss 34 positioned facing towards the first connecting sheet 50. The at least one first recess 341 is configured for avoidance of the first tab of the electrode assembly 220. The second boss 35 of the lower plastic member 30 defines at least one second recess 351 at one side of the second boss 35 positioned facing towards the second connecting sheet 423. The at least one second recess 351 is configured for avoidance of the second tab of the electrode assembly 220.

The first heat insulation sheet 91 and the second heat insulation sheet 92 are as follows.

The differences between the first heat insulation sheet 91 in FIG. 29A and the first heat insulation sheet 91 in FIG. 3, as well as the differences between the second heat insulation sheet 92 in FIG. 29A and the second heat insulation sheet 92 in FIG. 3, will be described below, while the identical aspects may be referred to in the relevant description of FIG. 3 and will not be repeated here.

Reference can be made to FIG. 29 and FIG. 30 in combination. In this embodiment, the number of the first heat insulation sheets 91 may be two. Among the two first heat insulation sheets 91, one first heat insulation sheet 91 is positioned between the lower-plastic-member body 31 and one first tab connecting-portion 52, and is positioned at one side of the first rib 32e facing away from the first through-hole 313 and one side of the second rib 32f facing away from the first through-hole 313, so as to avoid interference during assembly between the first heat insulation sheet 91 and the first terminal-post 41. The other first heat insulation sheet 91 is positioned between the lower-plastic-member body 31 and the other first tab connecting-portion 52, and is positioned at one side of the third rib 32g facing away from the first through-hole 313 and one side of the fourth rib 32h facing away from the first through-hole 313, so as to avoid interference during assembly between the other first heat insulation sheet 91 and the first terminal-post 41.

A projection of one first tab connecting-portion 52 on the lower plastic member 30 in the Z direction falls within a projection of one first heat insulation sheet 91 on the lower plastic member 30 in the Z direction. A projection of the other first tab connecting-portion 52 on the lower plastic member 30 in the Z direction falls within a projection of the other first heat insulation sheet 91 on the lower plastic member 30 in the Z direction.

The number of the second heat insulation sheets 92 may be two. Among the two second heat insulation sheets 92, one second heat insulation sheet 92 is positioned between the lower-plastic-member body 31 and one second tab connecting-portion 4231, and is positioned at one side of the sixth rib 32j facing away from the second through-hole 314 and one side of the seventh rib 32k facing away from the second through-hole 314, so as to avoid interference during assembly between the second heat insulation sheet 92 and the second terminal-post 42. The other second heat insulation sheet 92 is positioned between the lower-plastic-member body 31 and the other second tab connecting-portion 4231, and is positioned at one side of the eighth rib 321 facing away from the second through-hole 314 and one side of the ninth rib 32m facing away from the second through-hole 314, so as to avoid interference during assembly between the other second heat insulation sheet 92 and the second terminal-post 42.

A projection of one second tab connecting-portion 4231 on the lower plastic member 30 in the Z direction falls within a projection of one second heat insulation sheet 92 on the lower plastic member 30 in the Z direction. A projection of the other second tab connecting-portion 4231 on the lower plastic member 30 in the Z direction falls within a projection of the other second heat insulation sheet 92 on the lower plastic member 30 in the Z direction.

The second terminal-post 42 is as follows.

The differences between the second terminal-post 42 in FIG. 29A and the second terminal-post 42 in FIG. 3 will be described below, while the identical aspects may be referred to in the relevant description of FIG. 3 and will not be repeated here.

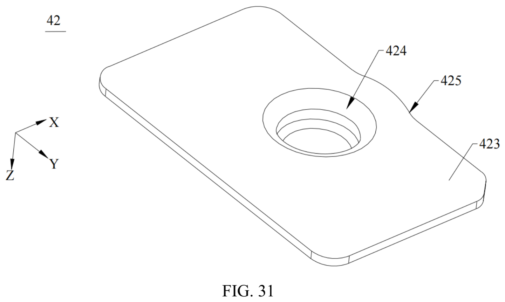

Reference can be made to FIG. 29 and FIG. 31 in combination, where FIG. 31 is a schematic structural view of a second terminal-post 42 of the top-cover assembly 100 illustrated in FIG. 29A.

In this embodiment, the second terminal-post 42 may define a cavity 424 therein. An opening of the cavity 424 is positioned on the surface of the second connecting sheet 423 positioned facing away from the second post-body (not shown in the figure). The cavity 424 may extend from the second connecting sheet 423 to the second post-body through the second base (not shown in the figure).

It can be understood that by designing the second terminal-post 42 to be hollow, on the basis of ensuring the strength and electrical performance of the second terminal-post 42, the weight of the second terminal-post 42 can be reduced, thereby saving the cost, improving the production efficiency of the top-cover assembly 100, and realizing the lightweight of the top-cover assembly 100.

Further, the second connecting sheet 423 may be provided with a flange 425 at the third edge of the second connecting sheet 423. The flange 425 protrudes from the third edge of the second connecting sheet 423 and protrudes towards the tenth rib 32n of the lower plastic member 30. By providing the flange 425, the bearing area of the second connecting sheet 423 can be increased, thereby preventing the second sealing ring 62 sleeved on the second terminal-post 42 from exceeding the edge of the second connecting sheet 423, so as to better support the second sealing ring 62.

The embodiments of the present disclosure are described in detail above. Specific examples are used in this specification to describe the principle and implementations of the present disclosure. The description of the embodiments is only used to help understand the method and core ideas of the present disclosure. Meanwhile, those of ordinary skill in the art may make modifications to the specific implementations and application scopes according to the idea of the present disclosure. In conclusion, the content of the specification shall not be construed as a limitation to the present disclosure.

## Claims

1. A top-cover assembly (100), comprising:
a lower plastic member (30), wherein the lower plastic member (30) comprises a lower-plastic-member body (31), the lower-plastic-member body (31) defines a first through-hole (313), and the first through-hole (313) extends through the lower-plastic-member body (31) in a thickness direction of the lower plastic member (30);
a first terminal-post (41) passing through the first through-hole (313); and
a first connecting sheet (50), wherein the first connecting sheet (50) is connected to the first terminal-post (41), and the first connecting sheet (50) is further configured to be welded to a first tab of an electrode assembly (220), to enable the first terminal-post (41) to be electrically connected to the electrode assembly (220) through the first connecting sheet (50); and the first connecting sheet (50) is stacked with the lower-plastic-member body (31), the first connecting sheet (50) extends linearly in a width direction of the top-cover assembly (100), and a centerline (O1) of the first connecting sheet (50) in a length direction of the top-cover assembly (100) is offset from a centerline (O2) of the first terminal-post (41).

2. The top-cover assembly (100) of claim 1, wherein the first connecting sheet (50) comprises a first terminal-post connecting-portion (51) and two first tab connecting-portions (52), the first terminal-post connecting-portion (51) is connected to the first terminal-post (41) to enable the first connecting sheet (50) to be electrically connected to the first terminal-post (41), and a centerline of the first terminal-post connecting-portion (51) in the length direction of the top-cover assembly (100) is coaxial with the centerline (O1) of the first connecting sheet (50) in the length direction of the top-cover assembly (100) and is offset from the centerline (O2) of the first terminal-post (41); and the two first tab connecting-portions (52) are fixedly connected to both sides of the first terminal-post connecting-portion (51) in the width direction of the top-cover assembly (100) respectively, one of the two first tab connecting-portions (52), the first terminal-post connecting-portion (51), and another of the two first tab connecting-portions (52) are sequentially connected in the width direction of the top-cover assembly (100) and are arranged in a straight line, and the two first tab connecting-portions (52) are configured to be welded to the first tab of the electrode assembly (220) to enable the first connecting sheet (50) to be electrically connected to the electrode assembly (220).

3. The top-cover assembly (100) of claim 1, wherein the lower plastic member (30) further comprises at least one rib (32), the at least rib is fixedly connected to the lower-plastic-member body (31), is spaced apart from the first through-hole (313), and is adjacent to the first connecting sheet (50), the at least one rib (32) comprises a first rib (32a) and a second rib (32b), both the first rib (32a) and the second rib (32b) are fixedly connected to a surface of the lower-plastic-member body (31) positioned facing towards the first connecting sheet (50), and are positioned at opposite sides of the first through-hole (313) in a length direction of the lower plastic member (30), both the first rib (32a) and the second rib (32b) extend in a width direction of the lower plastic member (30), and in the length direction of the lower plastic member (30), the first connecting sheet (50) is positioned between the first rib (32a) and the second rib (32b); and
the first rib (32a) and the second rib (32b) have different dimensions in the width direction of the lower plastic member (30), and/or a distance between the first rib (32a) and the first through-hole (313) is different from a distance between the second rib (32b) and the first through-hole (313) in the length direction of the lower plastic member (30).

4. The top-cover assembly (100) of claim 3, wherein the lower plastic member (30) has a first side-surface (318), the first side-surface (318) is an end surface of one end of the lower plastic member (30) in the length direction of the lower plastic member (30), the first connecting sheet (50) has a first edge (511) and a second edge (512), the first edge (511) and the second edge (512) are arranged opposite to each other in the length direction of the top-cover assembly (100), and the first edge (511) is closer to the first side-surface than the second edge (512);
in the length direction of the lower plastic member (30), a distance between the first rib (32a) and the first edge (511) of the first connecting sheet (50) ranges from 0.5 mm to 9 mm; and
in the length direction of the lower plastic member (30), a distance between the second rib (32b) and the second edge (512) of the first connecting sheet (50) ranges from 0.5 mm to 9 mm.

5. The top-cover assembly (100) of claim 3, wherein the top-cover assembly (100) further comprises a first heat insulation sheet (91), the first heat insulation sheet (91) is positioned between the lower-plastic-member body (31) and the first connecting sheet (50), the first heat insulation sheet (91) defines a first via hole (911), a first avoidance hole (912), and a second avoidance hole (913), the first via hole (911), the first avoidance hole (912), and the second avoidance hole (913) all extend through the first heat insulation sheet (91) in a thickness direction of the first heat insulation sheet (91), the first terminal-post (41) passes through the first via hole (911), the first rib (32a) passes through the first avoidance hole (912), a dimension of the first avoidance hole (912) is adapted to a dimension of the first rib (32a), the second rib (32b) passes through the second avoidance hole (913), and a dimension of the second avoidance hole (913) is adapted to a dimension of the second rib (32b); and
in a thickness direction of the top-cover assembly (100), a projection of the first connecting sheet (50) on the lower plastic member (30) falls within a projection of the first heat insulation sheet (91) on the lower plastic member (30).

6. The top-cover assembly (100) of claim 2, wherein the lower plastic member (30) further comprises at least one rib (32), the at least rib (32) is fixedly connected to the lower-plastic-member body (31), is spaced apart from the first through-hole (313), and is adjacent to the first connecting sheet (50), the at least one rib (32) comprises a first rib (32e), a second rib (32f), a third rib (32g), a fourth rib (32h), and a fifth rib (32i), and the first rib (32e), the second rib (32f), the third rib (32g), the fourth rib (32h), and the fifth rib (32i) are all disposed at a periphery of the first through-hole (313);
both the first rib (32e) and the second rib (32f) are positioned at one side of the lower plastic member (30) in a width direction of the lower plastic member (30), and both the first rib (32e) and the second rib (32f) extend in a length direction of the lower plastic member (30), and are arranged opposite to and spaced apart from each other in the length direction of the lower plastic member (30);
both the third rib (32g) and the fourth rib (32h) are positioned at another side of the lower plastic member (30) in the width direction of the lower plastic member (30), and both the third rib (32g) and the fourth rib (32h) extend in the length direction of the lower plastic member (30), and are arranged opposite to and spaced apart from each other in the length direction of the lower plastic member (30); and the third rib (32g) is further arranged opposite to and spaced apart from the first rib (32e) in the width direction of the lower plastic member (30), and the fourth rib (32h) is further arranged opposite to and spaced apart from the second rib (32f) in the width direction of the lower plastic member (30);
the fifth rib (32i) extends in the width direction of the lower plastic member (30), and in the width direction of the lower plastic member (30), the first rib (32e), the fifth rib (32i), and the third rib (32g) are arranged in sequence; and
the first connecting sheet (50) is positioned in a gap region between the fifth rib (32i) and each of the second rib (32f) and the fourth rib (32h), and abuts against the fifth rib (32i).

7. The top-cover assembly (100) of claim 6, wherein the top-cover assembly (100) further comprises two first heat insulation sheets (91);
one of the two first heat insulation sheets (91) is positioned between the lower-plastic-member body (31) and one of the two first tab connecting-portions (52), and is positioned at one side of each of the first rib (32e) and the second rib (32f) that is positioned facing away from the first through-hole (313); and in a thickness direction of the top-cover assembly (100), a projection of one of the two first tab connecting-portions (52) on the lower plastic member (30) falls within a projection of one of the two first heat insulation sheets (91) on the lower plastic member (30); and
another of the two first heat insulation sheets (91) is positioned between the lower-plastic-member body (31) and another of the two first tab connecting-portions (52), and is positioned at one side of each of the third rib (32g) and the fourth rib (32h) that is positioned facing away from the first through-hole (313); and in the thickness direction of the top-cover assembly (100), a projection of the another of the two first tab connecting-portions (52) on the lower plastic member (30) falls within a projection of another of the two first heat insulation sheets (91) on the lower plastic member (30).

8. The top-cover assembly (100) of claim 6, wherein the lower plastic member (30) has a first side-surface (318), the first side-surface (318) is an end surface of one end of the lower plastic member (30) in the length direction of the lower plastic member (30), the first connecting sheet (50) has a first edge (511) and a second edge (512), the first edge (511) and the second edge (512) are arranged opposite to each other in the length direction of the top-cover assembly (100), and the first edge (511) is closer to the first side-surface than the second edge (512);
a radius of part of the first terminal-post (41) connected to the first connecting sheet (50) is R1;
in the width direction of the lower plastic member (30), a distance L5 between the first rib (32e) and a centerline of the first through-hole (313) in the length direction of the lower plastic member (30) satisfies: (R1 + 0.5 mm) ≤ L5 ≤ (R1 + 5 mm);
in the width direction of the lower plastic member (30), a distance L6 between the second rib (32f) and the centerline of the first through-hole (313) in the length direction of the lower plastic member (30) satisfies: (R1 + 0.5 mm) ≤ L6 ≤ (R1 + 5 mm);
in the width direction of the lower plastic member (30), a distance L7 between the third rib (32g) and the centerline of the first through-hole (313) in the length direction of the lower plastic member (30) satisfies: (R1 + 0.5 mm) ≤ L7 ≤ (R1 + 5 mm);
in the width direction of the lower plastic member (30), a distance L8 between the fourth rib (32h) and the centerline of the first through-hole (313) in the length direction of the lower plastic member (30) satisfies: (R1 + 0.5 mm) ≤ L8 ≤ (R1 + 5 mm); and
in the length direction of the lower plastic member (30), a distance between the fifth rib (32i) and the first edge (511) of the first connecting sheet (50) ranges from 0.5 mm to 9 mm.

9. The top-cover assembly (100) of claim 5 or 7, wherein the lower plastic member (30) further comprises a barrier wall (33), the barrier wall (33) surrounds an outer edge of the lower-plastic-member body (31) and protrudes from a surface of the lower-plastic-member body (31) positioned facing towards the first connecting sheet (50), the barrier wall (33) and the lower-plastic-member body (31) cooperatively define an accommodating groove (Q), and the first heat insulation sheet (91), part of the first terminal-post (41), and part of the first connecting sheet (50) are all positioned in the accommodating groove (Q); and
the lower plastic member (30) further comprises a first boss (34) and a second boss (35), both the first boss (34) and the second boss (35) are fixedly connected to the lower-plastic-member body (31) and protrude from the surface of the lower-plastic-member body (31) positioned facing towards the first connecting sheet (50), the first boss (34) and the second boss (35) are respectively positioned at both ends of the lower-plastic-member body (31) in a length direction of the lower-plastic-member body (31) and are connected to the barrier wall (33); and the first boss (34) defines at least one first recess (341) at one side of the first boss (34) positioned facing towards the first connecting sheet (50), the second boss (35) defines at least one second recess (351) at one side of the second boss (35) positioned facing towards the first connecting sheet (50), and the at least one first recess (341) and the at least one second recess (351) are all configured for avoidance of the electrode assembly (220).

10. The top-cover assembly (100) of any one of claims 2 to 8, wherein a surface of each of the two first tab connecting-portions (52) configured to be positioned facing towards the electrode assembly (220) is recessed, relative to a surface of the first terminal-post connecting-portion (51) configured to be positioned facing towards the electrode assembly (220), towards a top cover (10); and part of the first terminal-post (41) is positioned in a gap region between the first terminal-post connecting-portion (51) and the lower plastic member (30), and is welded to the first terminal-post connecting-portion (51).

11. The top-cover assembly (100) of any one of claims 2 to 8, wherein the lower plastic member (30) has a first side-surface (318), the first side-surface (318) is an end surface of one end of the lower plastic member (30) in the length direction of the lower plastic member (30), the first terminal-post connecting-portion (51) has a first edge (511) and a second edge (512), the first edge (511) and the second edge (512) are arranged opposite to each other in the length direction of the top-cover assembly (100), the first edge (511) is closer to the first side-surface (318) than the second edge (512), the first edge (511) of the first terminal-post connecting-portion (51) serves as a first edge (511) of the first connecting sheet (50), and the second edge (512) of the first terminal-post connecting-portion (51) serves as a second edge (512) of the first connecting sheet (50); and
the first connecting sheet (50) further comprises an indentation array (53), the indentation array (53) is disposed on a surface of the first terminal-post connecting-portion (51) positioned facing away from the lower plastic member (30), a minimum distance (S1) between the indentation array (53) and the first edge (511) in the length direction of the top-cover assembly (100) is smaller than a minimum distance (S2) between the indentation array (53) and the second edge (512) in the length direction of the top-cover assembly (100), and a projection of the first terminal-post (41) on the first connecting sheet (50) in a thickness direction of the top-cover assembly (100) falls within a region defined by the indentation array (53) on the first connecting sheet (50).

12. The top-cover assembly (100) of any one of claims 1 to 8, wherein the top-cover assembly (100) further comprises a second terminal-post (42), and the second terminal-post (42) has an integrated structure and comprises a second post-body (421), a second base (422), and a second connecting sheet (423);
the second post-body (421) passes through the lower plastic member (30) and is spaced apart from the first terminal-post (41) in the length direction of the top-cover assembly (100);
the second base (422) is coaxial with the second post-body (421) and is connected between the second post-body (421) and the second connecting sheet (423); and
the second connecting sheet (423) is stacked with the lower plastic member (30) and extends linearly in the width direction of the top-cover assembly (100), the second connecting sheet (423) comprises two second tab connecting-portions (4231), the two second tab connecting-portions (4231) are respectively positioned at both sides of the second base (422), and the two second tab connecting-portions (4231) are configured to be welded to a second tab of the electrode assembly (220), to enable the second connecting sheet (423) to be electrically connected to the electrode assembly (220).

13. The top-cover assembly (100) of claim 12, wherein a centerline (O3) of the second connecting sheet (423) in the length direction of the top-cover assembly (100) is offset from a centerline (O4) of the second post-body (421); and a distance between the centerline (O2) of the first terminal-post (41) and the centerline (O4) of the second post-body (421) is larger than a distance between the centerline (O1) of the first connecting sheet (50) in the length direction of the top-cover assembly (100) and the centerline (03) of the second connecting sheet (423) in the length direction of the top-cover assembly (100); and/or
the second terminal-post (42) has a solid structure; or the second terminal-post (42) defines a cavity (424) therein, an opening of the cavity (424) is positioned on a surface of the second connecting sheet (423) positioned facing away from the second post-body (421), and the cavity (424) extends from the second connecting sheet (423) to the second post-body (421) through the second base (422).

14. A battery (200), comprising an electrode assembly (220), a housing (210), and the top-cover assembly (100) of any one of claims 1 to 13, the top-cover assembly (100) is connected to the housing (210), the top-cover assembly (100) and the housing (210) cooperatively define an accommodating space, and the electrode assembly (220) is positioned in the accommodating space.

15. An electricity-consumption device (300), wherein the electricity-consumption device (300) comprises the battery (200) of claim 14.
